# EUROPEAN PATENT SPECIFICATION

(11) **EP 4 342 261 B1**
(45) Date of publication and mention of the grant of the patent: **26.11.2025**
(21) Application number: 22803495.5
(22) Date of filing: 16.05.2022
(51) Int. Cl.: H05B 3/00, B64D 15/12, B64D 15/20, F03D 80/40, F25C 5/08, F25D 21/02, F25D 21/08, H05B 3/84

(54) **SYSTEM AND METHOD FOR DETECTING AND REMOVING ICE FROM A SURFACE**
SYSTEM UND VERFAHREN ZUR ERKENNUNG UND ENTFERNUNG VON EIS VON EINER OBERFLÄCHE
SYSTÈME ET PROCÉDÉ DE DÉTECTION ET D'ÉLIMINATION DE LA GLACE D'UNE SURFACE

(30) Priority: 17.05.2021 US 202163189306 P
(43) Date of publication of application: 27.03.2024
(73) Proprietor: Betterfrost Technologies Inc., West Oakville, ON L6L 5W2 (CA)
(72) Inventor: SAAD, Sameh M. I., Stoney Creek ON L8J 3W3 (CA); CHAVES, Luciano F., Newmarket, Ontario L3Y 0E1 (CA); AHMED, Kazi Kased L., Toronto, Ontario M6J 2K4 (CA)
(74) Representative: Humphrey-Evans, Edward John
(86) International application number: PCT/CA2022/050769
(87) International publication number: WO 2022/241544

(56) References cited:
- EP-A1- 3 197 241
- WO-A1-2014/074034
- CA-A1- 2 158 030
- CN-A- 105 775 140
- US-A- 5 191 791
- US-A- 5 398 547
- US-A1- 2004 149 734
- US-A1- 2015 260 501
- US-A1- 2019 373 681
- US-A1- 2019 373 681

## Description

### Field

The described embodiments relate generally to a system and method for detecting and removing ice from a surface, and specifically to removing ice using a heating track provided at the surface.

### Background

The accumulation of frost, snow or ice on surfaces poses challenges in many applications, including for example, ice makers, freeze-dryer units, vaporization gas tanks and aerospace surfaces. In ice maker applications, a specific amount of ice should be made and then removed in a quick and energy-efficient manner. In vaporization gas tank applications, ice accumulates outside the tank and needs to be removed periodically to ensure the efficiency of the vaporizer isn't drastically reduced. In cooling solutions such as freeze-dryer units, ice often accumulates on the cooling plate, reducing the effectiveness of the system, and requires periodic defrosting to maintain efficiency, which can be time consuming and costly.

In aerospace applications, the accumulation of frost, snow or ice on critical aircraft surfaces (for example, the wing, rotor, aileron, rudder, or stabilizers) poses considerable risks. For example, accumulated ice may alter the airflow over the wing and tail, which reduces the lift force that keeps a plane in the air and can cause the aircraft to stall - a temporary or permanent loss of control of the aircraft which can cause a crash and fatalities. Accumulated snow, frost or ice may also add excessive weight to an aircraft that can reduce flight performance and when unaddressed, can result in hazardous flight operations. US2019373681A1 (Betterfrost) teaches of a safety method and system consisting of resistance checking for use with high power deicing and defogging systems. EP3197241A1 (Ego Elektro Geraetbau) discloses a heating device with a flat carrier, at least one heating conductor, a measuring device, a dielectric layer above or on the carrier, two electrodes running next to each other above or on the dielectric layer and a base insulation layer above the two electrodes. US5398547 (Innovative Dynamics) teaches of an improved ice sensor which is particularly effective in measuring and quantifying non-uniform, heterogeneous ice typically found on aircraft leading edges and top wing surfaces. US2004149734A1 (V. Petrenko et. al.) discloses the application of an alternating electric field to ice whereby to generate a resistive alternating current having a frequency greater than 1KHz in interfacial ice at an external interface. US5191791A (J. Gerardi et al.) teaches of a piezoelectric sensor which takes advantage of a change in capacitance being linearly proportional to ice thickness. Therefore, there is a need to rapidly detect accumulation of frost, snow or ice on surfaces and to remove detected frost, snow or ice in an energy-efficient manner.

### Summary

The scope of the invention is set out in independent system claim 1, independent method claim 8 and the respective dependent claims.

In accordance with an aspect of an embodiment, there is provided a system for detecting and removing ice from a surface. The system comprises an electrical current source for providing a pulse-electro thermal de-icing electrical current; and a heating track provided at the surface and connected to the electrical current source. In operation, the electrical current flows through the heating track to heat the heating track and the surface. The system also comprises a first control track provided at the surface spaced from the heating track; and a first capacitor for providing a first capacitance between the first control track and the heating track, the first capacitor comprising a first capacitor communication port for communicating the first capacitance. The system further comprises a memory for storing a de-icing condition; and a processor for determining, at least partly from the first capacitance, whether the deicing condition is satisfied. The processor is linked for communication with the memory, the first capacitor communication port, and the electrical current source. In operation, the processor controls the electrical current source to, when the de-icing condition is satisfied, provide the pulse-electro thermal de-icing electrical current to the heating track; and when the de-icing condition is not satisfied, not provide the pulse-electro thermal de-icing electrical current to the heating track.

In one or more embodiments, the system further comprises a second control track; and a second capacitor for measuring a second capacitance between the second control track and the heating track. The second capacitor comprises a second capacitor communication port for communicating the second capacitance to the processor. The system also comprises a third capacitor for measuring a third capacitance between the first control track and the second control track. The third capacitor comprises a third capacitor communication port for communicating the third capacitance to the processor. In operation, the processor determines whether the de-icing condition is satisfied partly based on the second capacitance and the third capacitance.

In one or more embodiments, the system further comprises at least one temperature sensor for measuring a temperature of the surface. The at least one temperature sensor is linked for communication with the processor. In operation, the processor determines whether the deicing condition is satisfied partly based on the temperature of the surface.

In one or more embodiments, in operation of the system, a change in resistance of the heating track provides an indication of a temperature of the surface to the processor. The processor determines whether the de-icing condition is satisfied partly based on the temperature of the surface.

In one or more embodiments, the surface comprises a temperature sensor. In operation, the temperature sensor provides an indication of a temperature of the surface to the processor and the processor determines whether the de-icing condition is satisfied partly based on the temperature of the surface.

In one or more embodiments, the heating track comprises a material selected partly based on its resistance, wherein the resistance is between 0.09 Ω·m⁻² and 9 Ω·m⁻² (1 ohm and 100 ohms per square foot) after the material has been processed to form the heating track.

In one or more embodiments, the system further comprises an AC excitation source for providing an AC excitation signal to the first capacitor at one or more frequencies. In operation, the AC excitation signal induces a first current through the first capacitor; and the processor determines whether the de-icing condition is satisfied partly based on the first capacitance at the one or more frequencies.

In one or more embodiments, in operation of the system, the AC excitation source provides a first excitation signal at a first frequency and a second excitation signal at a second frequency higher than the first frequency. Further, the processor determines a first difference in the first capacitance at the first frequency and the first capacitance at the second frequency. The first difference provides an indication of relative proportions of ice and water on the surface; and the processor determines whether the de-icing condition is satisfied partly based on the first difference. In some embodiments, the first frequency is 10-120 Hz and the second frequency is 0.1-1 MHz.

In one or more embodiments, in operation of the system, the AC excitation source further provides a third excitation signal at a third frequency. Differences between the first capacitance at the first frequency, the first capacitance at the second frequency and the first capacitance at the third frequency provide an indication of relative proportions of ice and water on the surface to the processor. The processor determines whether the de-icing condition is satisfied partly based on the differences in the first capacitance.

In one or more embodiments, in operation of the system, the AC excitation source provides a first intermediate excitation signal at a first intermediate frequency and a second intermediate excitation signal at a second intermediate frequency. The first intermediate frequency and the second intermediate frequency are 0.1-100 kHz.

The processor determines a second difference between the first capacitance at the first intermediate frequency and the first capacitance at the second intermediate frequency. The second difference provides an indication of relative proportions of ice and water on the surface. The processor determines whether the de-icing condition is satisfied partly based on the second difference.

In one or more embodiments, in operation of the system, the AC excitation source provides excitation signals at multiple frequencies between a start frequency and a stop frequency. The processor determines the first capacitance at two or more of the multiple frequencies. Further, the processor determines whether the de-icing condition is satisfied partly based on the determined first capacitance at the two or more of the multiple frequencies.

In one or more embodiments, the system further comprises an impedance meter, wherein the impedance meter provides an indication of the first capacitance based on a phase difference between the excitation signal and the first current.

In one or more embodiments, the system further comprises a bridge circuit. The bridge circuit comprises a first branch and a second branch. Each branch is connectable in parallel to i) at least one current delivery connector for delivering the AC excitation signal from the AC excitation source, and ii) at least one current delivery connector for returning the AC excitation signal to the AC excitation source. The first branch includes the first capacitor. In operation, an imbalance in electrical potential between the first branch and the second branch provides an indication of the first capacitance.

In one or more embodiments, in operation, the system switches between measuring the first capacitance, the second capacitance and the third capacitance.

In one or more embodiments, the system further includes one or more surface modules. The one or more surface modules each comprise a portion of the heating track, wherein the one or more portions of the heating track are configured to be coupled together to form the heating track. In one or more embodiments, the one or more surface modules include busbars for coupling each surface module to at least one other surface module.

In accordance with an aspect of an embodiment, there is provided a method of detecting and removing ice from a surface. The method comprises providing a heating track and a first control track on the surface; and measuring a first capacitance between the first control track and the heating track. The method also comprises communicating the first capacitance to a processor; and operating the processor to determine, at least partly from the first capacitance, whether a de-icing condition is satisfied. The method further comprises, when the de-icing condition is satisfied, providing a pulse-electro thermal de-icing electrical current to the heating track to heat the heating track and the surface. The method also comprises, when the de-icing condition is not satisfied, not providing the pulse-electro thermal de-icing electrical current to the heating track.

In one or more embodiments, the method further comprises providing a second control track on the surface. The method further comprises measuring a second capacitance between the second control track and the heating track; and measuring a third capacitance between the first control track and the second control track. The method further comprises communicating the second capacitance and the third capacitance to the processor. Further, operating the processor to determine whether the de-icing condition is satisfied is partly based on the second capacitance and the third capacitance.

In one or more embodiments, the method further comprises detecting a change in resistance of the heating track; and communicating to the processor the change in resistance of the heating track. Further, operating the processor to determine whether the de-icing condition is satisfied is partly based on the change in resistance of the heating track.

In one or more embodiments, the method further comprises providing an AC excitation signal to the first capacitor at one or more frequencies. The AC excitation signal induces a first current through the first capacitor. Further, operating the processor to determine whether the de-icing condition is satisfied is partly based on the first capacitance at the one or more frequencies. In one or more embodiments of the method, providing the AC excitation signal comprises providing a first excitation signal at a first frequency and a second excitation signal at a second frequency higher than the first frequency. The method further comprises operating the processor to determine a first difference in the first capacitance at the first frequency and the first capacitance at the second frequency. The first difference provides an indication of relative proportions of ice and water on the surface. Further, operating the processor to determine whether the de-icing condition is satisfied is partly based on the first difference. In some embodiments, the first frequency is IQ- 120 Hz and the second frequency is 0.1-1 MHz.

In one or more embodiments of the method, providing the AC excitation signal comprises providing a third excitation signal at a third frequency. Differences between the first capacitance at the first frequency, the first capacitance at the second frequency and the first capacitance at the third frequency provide an indication of relative proportions of ice and water on the surface to the processor. Further, operating the processor to determine whether the de-icing condition is satisfied is partly based on the differences in the first capacitance.

In one or more embodiments of the method, providing the AC excitation signal comprises providing a first intermediate excitation signal at a first intermediate frequency and a second intermediate excitation signal at a second intermediate frequency. The first intermediate frequency and the second intermediate frequency are 0.1-100 kHz. The method further comprises operating the processor to determine a second difference between the first capacitance at the first intermediate frequency and the first capacitance at the second intermediate frequency, the second difference providing an indication of relative proportions of ice and water on the surface. Further, operating the processor to determine whether the de-icing condition is satisfied is partly based on the second difference.

In one or more embodiments of the method, providing the AC excitation signal comprises providing excitation signals at multiple frequencies between a start frequency and a stop frequency. The method further comprises operating the processor to determine the first capacitance at two or more of the multiple frequencies. Further, operating the processor to determine whether the de-icing condition is satisfied is partly based on the determined first capacitance at the two or more of the multiple frequencies.

In one or more embodiments, the method further comprises providing an indication of the first capacitance based on a phase difference, measured by an impedance meter, between the excitation signal and the first current.

In one or more embodiments, the method further comprises providing an indication of the first capacitance based on an imbalance in electric potential between a first branch and a second branch of a bridge circuit. Each of the first branch and the second branch are connected in parallel across an AC excitation source that provides the AC excitation signal, wherein the first branch includes the first capacitor.

In one or more embodiments, the method further comprises switching between measuring the first capacitance, the second capacitance and the third capacitance.

In accordance with an aspect of an embodiment, there is provided a method for providing a smart surface for detecting and removing ice. The method comprises providing a surface; providing an electrical current source for providing a pulse-electro thermal de-icing electrical current; providing a heating track at the surface; and connecting the heating track to the electrical current source. In operation, the electrical current flows through the heating track to heat the heating track and the surface. The method also comprises providing a first control track at the surface spaced from the heating track; and providing a first capacitor for measuring a first capacitance between the first control track and the heating track. The first capacitor comprises a first capacitor communication port for communicating the first capacitance. The method further comprises providing a memory for storing a de-icing condition; providing a processor for determining, at least partly from the first capacitance, whether the de-icing condition is satisfied; and linking the processor for communication with the memory, the first capacitor communication port, and the electrical current source. In operation, the processor controls the electrical current source to: when the de-icing condition is satisfied, provide the pulse-electro thermal de-icing electrical current to the heating track, and when the de-icing condition is not satisfied, not provide the pulse-electro thermal de-icing electrical current to the heating track. In accordance with another aspect, there is provided a system for detecting and removing frozen accumulation from a surface, the system comprising: an electrical current source for providing a pulse-electro thermal de-icing (PEDT) electrical current; a heating track provided at the surface and coupled to the electrical current source, wherein, in operation, the PEDT electrical current flows through the heating track to heat via resistive heating the heating track so as to melt, at least in part, the frozen accumulation from the surface; a first control track provided at the surface spaced from the heating track, the heating track and the first control track forming a first capacitor for measuring a first capacitance between the first control track and the heating track; a memory for storing a de-icing condition; and a processor for determining, at least partly from the first capacitance, whether the de-icing condition is satisfied, the processor being linked to the memory, the first capacitor, and the electrical current source, wherein, in operation, the processor controls the electrical current source to: provide the PEDT electrical current to the heating track when the de-icing condition is satisfied; and not provide the PEDT electrical current to the heating track when the de-icing condition is not satisfied.

In one embodiment, the system further comprises a second control track provided at the surface spaced from the heating track; the second control track and the heating track forming a second capacitor for measuring a second capacitance between the second control track and the heating track, the second capacitor comprising a second capacitor communication port for communicating the second capacitance to the processor; and the first control track and the second control track forming a third capacitor for measuring a third capacitance between the first control track and the second control track, the third capacitor comprising a third capacitor communication port for communicating the third capacitance to the processor; wherein, in operation, the processor determines whether the de-icing condition is satisfied partly based on the second capacitance and the third capacitance.

In one embodiment, the system further comprises at least one temperature sensor for measuring a temperature of the surface, wherein the at least one temperature sensor is linked for communication with the processor, and, in operation, the processor determines whether the de-icing condition is satisfied partly based on the temperature of the surface.

In one embodiment, in operation, a change in resistance of the heating track provides an indication of a temperature of the surface to the processor and the processor determines whether the de-icing condition is satisfied partly based on the temperature of the surface.

In one embodiment, the surface comprises a temperature sensor and in operation, the temperature sensor provides an indication of a temperature of the surface to the processor and the processor determines whether the de-icing condition is satisfied partly based on the temperature of the surface.

In one embodiment, the heating track comprises a material selected partly based on its resistance, wherein the resistance is between 0.09 Ω·m⁻² and 9 Ω·m⁻² (1 ohm and 100 ohms per square foot) after the material has been processed to form the heating track.

In one embodiment, the system further comprises an AC excitation source for providing an AC excitation signal to the first capacitor at one or more frequencies, wherein, in operation: the AC excitation signal induces a first current through the first capacitor; and the processor determines whether the de-icing condition is satisfied partly based on the first capacitance at the one or more frequencies.

In one embodiment, in operation, the AC excitation signal comprises a first excitation signal at a first frequency and a second excitation signal at a second frequency higher than the first frequency; the processor determines a first difference in the first capacitance at the first frequency and the first capacitance at the second frequency, the first difference providing an indication of relative proportions of ice and water on the surface; and the processor determines whether the de-icing condition is satisfied partly based on the first difference.

In one embodiment, the first frequency is 10-120 Hz and the second frequency is 0.1-1 MHz.

In one embodiment, in operation, the AC excitation signal further comprises a third excitation signal at a third frequency and differences between the first capacitance at the first frequency, the first capacitance at the second frequency and the first capacitance at the third frequency provide an indication of relative proportions of ice and water on the surface to the processor; and wherein the processor determines whether the de-icing condition is satisfied partly based on the differences in the first capacitance.

In one embodiment, in operation, the AC excitation signal comprises a first intermediate excitation signal at a first intermediate frequency and a second intermediate excitation signal at a second intermediate frequency, wherein the first intermediate frequency and the second intermediate frequency are 0.1-100 kHz; the processor determines a second difference between the first capacitance at the first intermediate frequency and the first capacitance at the second intermediate frequency, the second difference providing an indication of relative proportions of ice and water on the surface; and the processor determines whether the deicing condition is satisfied partly based on the second difference.

In one embodiment, in operation, the AC excitation signal comprises excitation signals at multiple frequencies between a start frequency and a stop frequency; the processor determines the first capacitance at two or more of the multiple frequencies; and the processor determines whether the de-icing condition is satisfied partly based on the determined first capacitance at the two or more of the multiple frequencies.

In one embodiment, the system further comprises an impedance meter, wherein the impedance meter provides an indication of the first capacitance based on a phase difference between the excitation signal and the first current.

In one embodiment, the system further comprises a bridge circuit, wherein: the bridge circuit comprises a first branch and a second branch, each branch connectable in parallel to i) at least one current delivery connector for delivering the AC excitation signal from the AC excitation source, and ii) at least one current delivery connector for returning the AC excitation signal to the AC excitation source, the first branch including the first capacitor; and wherein, in operation, an imbalance in electrical potential between the first branch and the second branch provides an indication of the first capacitance.

In one embodiment, in operation, the system switches between measuring the first capacitance, the second capacitance and the third capacitance.

In one embodiment, the system further includes one or more surface modules, wherein the one or more surface modules each comprise a portion of the heating track, wherein the one or more portions of the heating track are configured to be coupled together to form the heating track.

In one embodiment, the one or more surface modules include busbars for coupling each surface module to at least one other surface module.

In one embodiment, the first control track is coupled to the electrical current source and wherein, in operation, the PEDT electrical current is also provided the first control track when the de-icing condition is satisfied.

In one embodiment, at least one of the first control track and the second control track is coupled to the electrical current source and wherein the PEDT electrical current is also provided to the at least one of the first control track and the second control track when the de-icing condition is satisfied.

In accordance with another aspect, there is provided a method of detecting and removing frozen accumulation from a surface, the method comprising: measuring a first capacitance between a first control track and a heating track, each of the heating track and the first control track being provided on the surface, the first control track being spaced from the heating track, the heating track and the first control track forming a first capacitor; communicating the first capacitance to a processor; operating the processor to determine, at least partly from the first capacitance, whether a de-icing condition is satisfied; providing a pulse-electro thermal de-icing (PETD) electrical current to the heating track to heat via resistive heating the heating track and the surface when the de-icing condition is satisfied; and not providing the PETD electrical current to the heating track when the de-icing condition is not satisfied.

In one embodiment, the method further comprises: measuring a second capacitance between a second control track provided on the surface and the heating track, the second control track being provided on the surface and spaced from the heating track and the first control track; measuring a third capacitance between the first control track and the second control track; and communicating the second capacitance and the third capacitance to the processor; wherein, operating the processor to determine whether the de-icing condition is satisfied is partly based on the second capacitance and the third capacitance. In one embodiment, the method further comprises detecting a change in resistance of the heating track; and communicating to the processor the change in resistance of the heating track; wherein, operating the processor to determine whether the de-icing condition is satisfied is partly based on the change in resistance of the heating track.

In one embodiment, the method further comprises: providing an AC excitation signal to the first capacitor at one or more frequencies, wherein the AC excitation signal induces a first current through the first capacitor; and wherein operating the processor to determine whether the de-icing condition is satisfied is partly based on the first capacitance at the one or more frequencies.

In one embodiment, providing the AC excitation signal comprises providing a first excitation signal at a first frequency and a second excitation signal at a second frequency higher than the first frequency; the method further comprises operating the processor to determine a first difference in the first capacitance at the first frequency and the first capacitance at the second frequency, the first difference providing an indication of relative proportions of ice and water on the surface; and operating the processor to determine whether the de-icing condition is satisfied is partly based on the first difference.

In one embodiment, the first frequency is 10-120 Hz and the second frequency is 0.1-1 MHz.

In one embodiment, providing the AC excitation signal comprises providing a third excitation signal at a third frequency and differences between the first capacitance at the first frequency, the first capacitance at the second frequency and the first capacitance at the third frequency provide an indication of relative proportions of ice and water on the surface to the processor; and operating the processor to determine whether the de-icing condition is satisfied is partly based on the differences in the first capacitance.

In one embodiment, providing the AC excitation signal comprises providing a first intermediate excitation signal at a first intermediate frequency and a second intermediate excitation signal at a second intermediate frequency, wherein the first intermediate frequency and the second intermediate frequency are 0.1-100 kHz; the method further comprises operating the processor to determine a second difference between the first capacitance at the first intermediate frequency and the first capacitance at the second intermediate frequency, the second difference providing an indication of relative proportions of ice and water on the surface; and operating the processor to determine whether the de-icing condition is satisfied is partly based on the second difference.

In one embodiment, providing the AC excitation signal comprises providing excitation signals at multiple frequencies between a start frequency and a stop frequency; and the method further comprises operating the processor to determine the first capacitance at two or more of the multiple frequencies; and operating the processor to determine whether the de-icing condition is satisfied is partly based on the determined first capacitance at the two or more of the multiple frequencies.

In one embodiment, the method further comprises providing an indication of the first capacitance based on a phase difference, measured by an impedance meter, between the excitation signal and the first current.

In one embodiment, the method further comprises providing an indication of the first capacitance based on an imbalance in electric potential between a first branch and a second branch of a bridge circuit, wherein each of the first branch and the second branch are connected in parallel across an AC excitation source that provides the AC excitation signal, wherein the first branch includes the first capacitor.

In one embodiment, the method further comprises switching between measuring the first capacitance, the second capacitance and the third capacitance.

In one embodiment, the PEDT electrical current is also provided to the first control track to heat via resistive heating the first control track when the de-icing condition is satisfied.

In one embodiment, the PEDT electrical current is also provided to at least one of the first control track and the second control track to heat via resistive heating the at least one of the first control track and the second control track when the de-icing condition is satisfied.

In accordance with another aspect, there is provided a method for providing a smart surface for detecting and removing ice, the method comprising: providing a heating track and a first control track at a surface, the first control track spaced from the heating track, the heating track and the first control track forming a first capacitor for measuring a first capacitance between the first control track and the heating track; providing an electrical current source for providing a pulse-electro thermal de-icing electrical current; connecting the heating track to the electrical current source, wherein, in operation, the electrical current flows through the heating track to heat the heating track and the surface; providing a memory for storing a deicing condition; providing a processor for determining, at least partly from the first capacitance, whether the de-icing condition is satisfied; and linking the processor for communication with the memory, the first capacitor, and the electrical current source, such that, in operation, the processor controls the electrical current source to: provide the pulse-electro thermal de-icing electrical current to the heating track when the de-icing condition is satisfied, and not provide the pulse-electro thermal de-icing electrical current to the heating track when the de-icing condition is not satisfied.

In accordance with another aspect, there is provided a non-transitory computer- readable medium, the computer-readable medium including instructions for detecting and removing frozen accumulation from a surface that when executed by a processor, cause the processor to: receive a first capacitance measured between a first control track and a heating track, each of the heating track and the first control track being provided on the surface, the first control track spaced from the heating track, the heating track and the first control track forming a first capacitor; determine, at least partly from the first capacitance, whether a deicing condition is satisfied; provide via an electrical current source a pulse-electro thermal deicing (PETD) electrical current to the heating track to heat the heating track and the surface to removing the frozen accumulation from the surface when the de-icing condition is satisfied; and not provide the PETD electrical current to the heating track when the de-icing condition is not satisfied.

In one embodiment, the instructions further cause the processor to: receive a second capacitance measured between a second control track provided on the surface and the heating track, the second control track spaced from the heating track and the first control track; receive a third capacitance measured between the first control track and the second control track; and wherein said processor determines whether the de-icing condition is satisfied is partly based on the second capacitance and the third capacitance.

In one embodiment, the instructions further cause the processor to: receive a detected change in resistance of the heating track; and wherein said determination whether the deicing condition is satisfied is partly based on the change in resistance of the heating track.

In one embodiment, the instructions further cause the processor to provide an AC excitation signal via an AC excitation source to the first capacitor at one or more frequencies, wherein the AC excitation signal induces a first current through the first capacitor; and wherein said determining whether the de-icing condition is satisfied is partly based on the first capacitance at the one or more frequencies.

In one embodiment, providing the AC excitation signal comprises providing a first excitation signal at a first frequency and a second excitation signal at a second frequency higher than the first frequency; the instructions further causing the processor to determine a first difference in the first capacitance at the first frequency and the first capacitance at the second frequency, the first difference providing an indication of relative proportions of ice and water on the surface; and said determining whether the de-icing condition is satisfied is partly based on the first difference.

In one embodiment, the first frequency is 10-120 Hz and the second frequency is 0.1-1 MHz.

In one embodiment, providing the AC excitation signal comprises providing a third excitation signal at a third frequency and differences between the first capacitance at the first frequency, the first capacitance at the second frequency and the first capacitance at the third frequency provide an indication of relative proportions of ice and water on the surface to the processor; and wherein said determining whether the de icing condition is satisfied is partly based on the differences in the first capacitance.

In one embodiment, providing the AC excitation signal comprises providing a first intermediate excitation signal at a first intermediate frequency and a second intermediate excitation signal at a second intermediate frequency, wherein the first intermediate frequency and the second intermediate frequency are 0.1-100 kHz; the instructions further causing the processor to determine a second difference between the first capacitance at the first intermediate frequency and the first capacitance at the second intermediate frequency, the second difference providing an indication of relative proportions of ice and water on the surface; and said determining whether the de-icing condition is satisfied is partly based on the second difference.

In one embodiment, providing the AC excitation signal comprises providing excitation signals at multiple frequencies between a start frequency and a stop frequency; and the instructions further causing the processor to determine the first capacitance at two or more of the multiple frequencies; and said determining whether the de-icing condition is satisfied is partly based on the determined first capacitance at the two or more of the multiple frequencies.

In one embodiment, the instructions further cause the processor to provide an indication of the first capacitance based on a phase difference, measured by an impedance meter, between the excitation signal and the first current.

In one embodiment, the instructions further cause the processor to provide an indication of the first capacitance based on an imbalance in electric potential between a first branch and a second branch of a bridge circuit, wherein each of the first branch and the second branch are connected in parallel across an AC excitation source that provides the AC excitation signal, wherein the first branch includes the first capacitor.

In one embodiment, the instructions further cause the processor to switch between measuring the first capacitance, the second capacitance and the third capacitance.

In one embodiment, the PEDT electrical current is also provided the first control track when the de-icing condition is satisfied.

In one embodiment, the PEDT electrical current is also provided to at least one of the first control track and the second control track when the de-icing condition is satisfied.

### Brief Description of the Drawings

For a better understanding of the embodiments described herein and to show more clearly how they may be carried into effect, reference will now be made, by way of example only, to the accompanying drawings which show at least one exemplary embodiment, and in which:
FIG. 1 is an exemplary block diagram showing several major components of a system for detecting and removing ice from a surface;
FIG. 2 is an exemplary block diagram showing a bridge circuit for measuring capacitance;
FIG. 3A is a graph showing relative dielectric permittivity of water and ice versus frequency;
FIG. 3B is a graph showing dielectric relaxation time of ice versus temperature;
FIG. 3C is a graph showing the transition frequency of ice versus temperature;
FIG. 4 is an exemplary block diagram showing several major components of a system for detecting and removing ice from a surface;
FIG. 5 is a flow chart illustrating an exemplary methodology for detecting and removing ice from a surface; and
FIG. 6 is a flow chart illustrating an exemplary methodology for providing a smart surface for detecting and removing ice.

**It** will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### Description of Exemplary Embodiments

It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein. It should be noted that terms of degree such as "substantially", "about" and "approximately" when used herein mean a reasonable amount of deviation of the modified term such that the end result is not significantly changed. These terms of degree should be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

The described systems and methods can provide a simultaneous detection and removal solution for detecting and removing frozen accumulation (for example, ice, frost or snow) from a surface. One or more control tracks or electrodes in combination with a heating track or electrode can be used for capacitive sensing of the nature and amount of frozen accumulation on the surface. The heating track can be used to melt the detected frozen accumulation from the surface using resistive heating. A pulse-electro thermal de-icing (PETD) electrical current may flow through the heating track to heat the heating track and the surface. The melted accumulation can slide down the surface under gravitational force or can be removed using an external mechanism. The PETD electrical current can provide a high-density heating power (W/m<2>) that enables rapid and energy-efficient de-icing. The rapid heating can ensure that only a thin or boundary layer of the frozen accumulation on the surface (for example, a 1 pm to 1mm thick layer) is heated to its melting point.

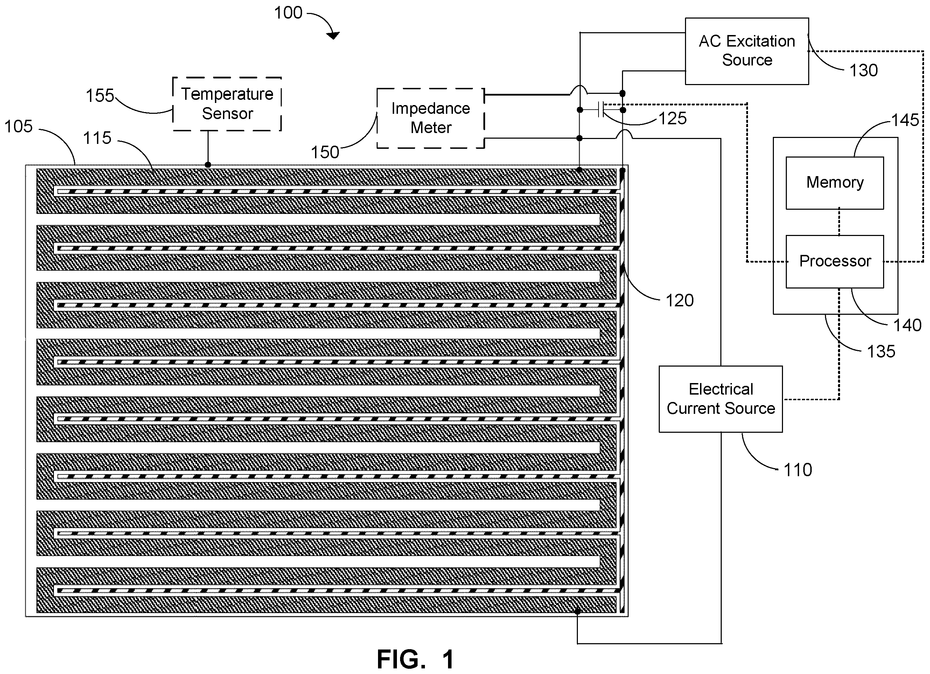

FIG. 1 illustrates exemplary aspects of an embodiment of the system for detecting and removing ice from a surface. The system 100 of FIG. 1 can detect and remove ice from a surface 105. The system 100 includes an electrical current source 110, a heating track 115 provided at the surface 105, a first control track 120 provided at the surface 105, a first capacitor 125, an AC excitation source 130 and a control unit 135.

The heating track 115 is connected to the electrical current source 110. In operation, the electrical current source 110 can provide a PETD electrical current that flows through the heating track 115 to heat the heating track 115 and the surface 105. The heating track 115 may comprise a material selected partly based on its resistance. After the material has been processed to form the heating track, its resistance can be between 0.09 Ω·m⁻² and 9 Ω·m⁻² (1 ohm and 100 ohms per square foot).

The first control track 120 may be spaced from the heating track 115 to provide one electrode of the first capacitor 125. The heating track 115 can provide the other electrode of the first capacitor 125. FIG. 1 shows one example of the geometrical structure of the heating track 115 and the first control track 120, and the corresponding spacing between them. Other embodiments may use different geometrical structures.

In operation, the first capacitance of the first capacitor 125 can be measured in response to an AC excitation signal provided by the AC excitation source 130. The AC excitation source 130 may provide the AC excitation signal at one or more frequencies and the first capacitance can be measured at each of the one or more frequencies. The permittivity of the dielectric (between the two capacitor electrodes - the heating track 115 and the first control track 120) of the first capacitor 125 depends on the nature and amount of frozen accumulation on the portion of surface 105 corresponding to the spacing between the heating track 115 and the first control track 120. Therefore, the first capacitance can change based on the nature and amount of frozen accumulation on surface 105 and measurements of the first capacitance can be used to monitor the nature and amount of frozen accumulation. The first capacitor 125 may include a first capacitor communication port for communicating the first capacitance to the control unit 135.

The control unit 135 includes a processor 140 and a memory 145. The processor 140 is communicatively coupled with the memory 145, the electrical current source 110, the AC excitation source 130 and the first capacitor communication port of the first capacitor 125. The processor 140 can control the AC excitation source 130 to provide an AC excitation signal to the first capacitor 125 at one or more frequencies.

The memory 145 may store a de-icing condition. The de-icing condition may correspond to the first capacitance indicating that the amount of accumulated ice exceeds a threshold amount. The processor 140 can determine, at least partly from the first capacitance at one or more frequencies, whether the de-icing condition is satisfied. When the de-icing condition is satisfied, the processor 140 can control the electrical current source 110 to provide the PETD electrical current to the heating track 115.

When the de-icing condition is not satisfied, the processor 140 can control the electrical current source 110 to not provide the PETD electrical current to the heating track 115.

In some embodiments, the system 100 may include an impedance meter 150 for measuring the first capacitance. In operation, the AC excitation source 130 may provide an AC excitation signal to the first capacitor 125 that induces a corresponding first current through the first capacitor 125. The impedance meter 150 can provide an indication of the corresponding first capacitance based on a phase difference between the AC excitation signal and the induced first current. The impedance meter 150 may provide the indication of the first capacitance directly to the processor 140 or via the first capacitor communication port of first capacitor 125. The first capacitance may change based on the nature and amount of frozen accumulation on surface 105 and the impedance meter 150 can provide a corresponding indication. The de-icing condition may be based on an impedance meter indication corresponding to a threshold detected thickness of frozen accumulation, for example, 1mm thickness. When the frozen accumulation thickness exceeds the threshold thickness, the deicing condition may be satisfied and the processor 140 can control the electrical current source 110 to provide the PETD electrical current to the heating track 115. The resulting heating of surface 105 can cause the accumulated ice to melt. After the detected thickness of accumulated ice falls below the threshold thickness, the de-icing condition may no longer be satisfied and the processor 140 can control the electrical current source 110 to not provide the PETD electrical current to the heating track 115.

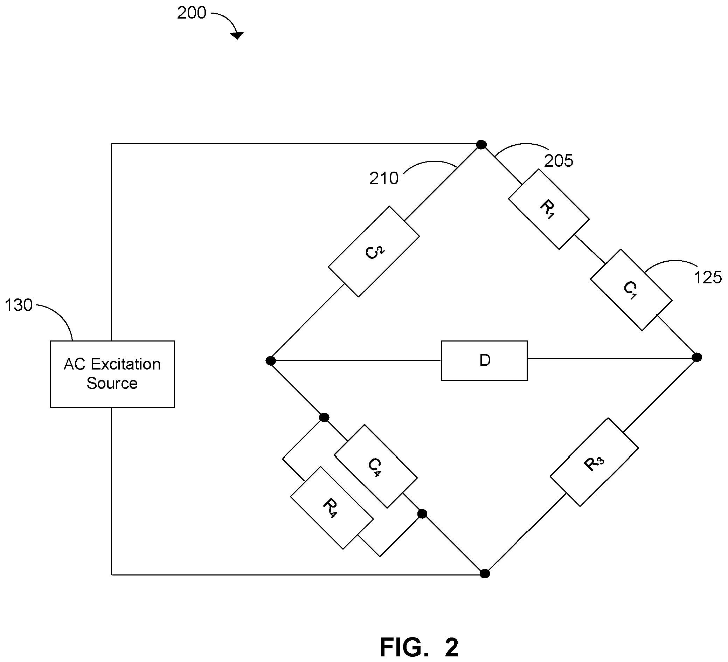

Reference is next made to FIG. 2 illustrating an exemplary bridge circuit for measuring capacitance. In some embodiments, the system 100 may include a bridge circuit 200 for measuring the first capacitance. The bridge circuit 200 may comprise a first branch 205 that includes the first capacitor 125 and a second branch 210. Each of the first branch 205 and the second branch 210 may be connectable in parallel to i) at least one current delivery connector for delivering the AC excitation signal from the AC excitation source 130, and ii) at least one current delivery connector for returning the AC excitation signal to the AC excitation source 130. In operation, at a first time, the AC excitation source 130 may provide an AC excitation signal and the bridge circuit 200 can be balanced for the first capacitance corresponding to a no accumulated ice condition. At a second time corresponding to an accumulated ice condition, the AC excitation source 130 again provides an AC excitation signal and the bridge circuit 200 may become unbalanced because of an increase in the first capacitance (corresponding to the accumulated ice). The degree of unbalance can provide an indication of the increase in the first capacitance thereby providing an indication of the amount of accumulated ice. The de-icing condition stored in memory 145 can be based on the degree of unbalance of the bridge circuit 200.

When the de-icing condition is satisfied, the processor 140 can control the electrical current source 110 to provide the PETD electrical current to the heating track 115. The resulting heating of surface 105 can cause the accumulated ice to melt. After the accumulated ice has been melted and removed, the first capacitance may decrease back to the no accumulated ice condition and the bridge circuit 200 may become balanced again. When the de-icing condition is no longer satisfied, the processor 140 can control the electrical current source 110 to not provide the PETD electrical current to the heating track 115.

In some embodiments, the bridge circuit 200 may be balanced after every de icing. In other embodiments, the bridge circuit 200 may be balanced at regular time intervals, for example, once a day or once a week.

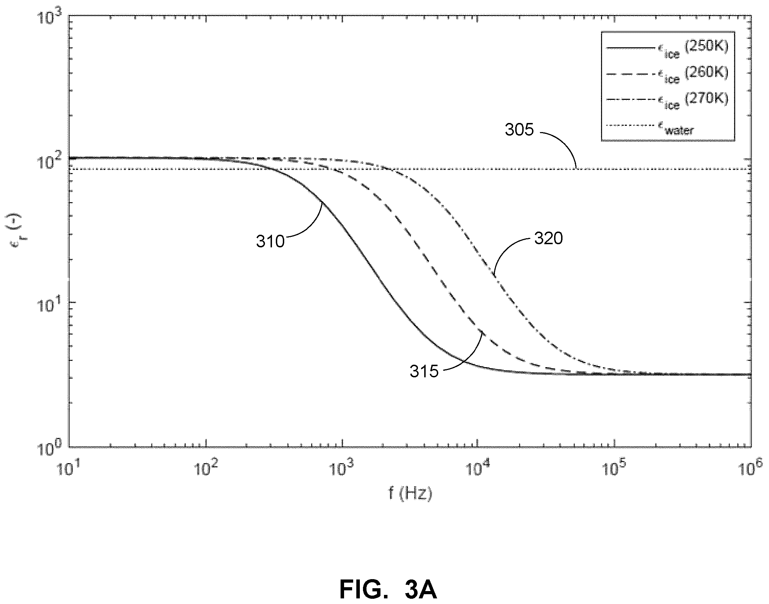

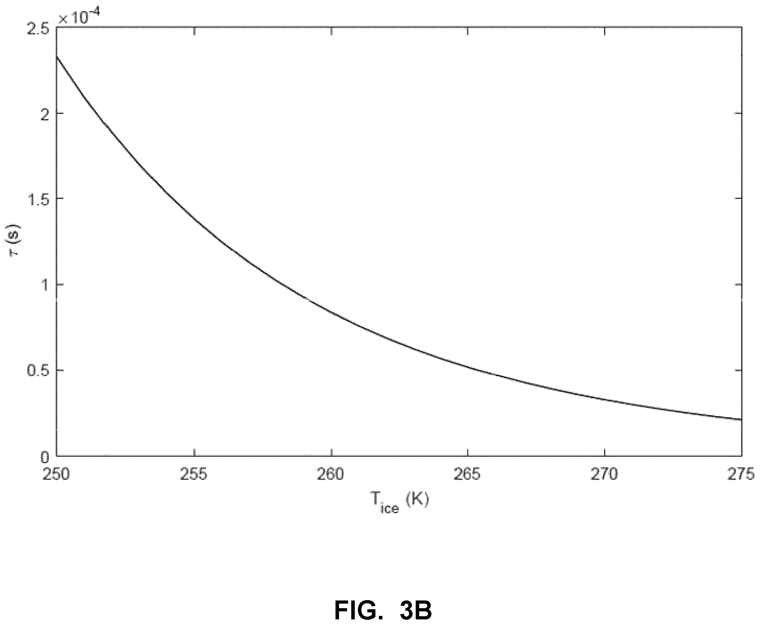

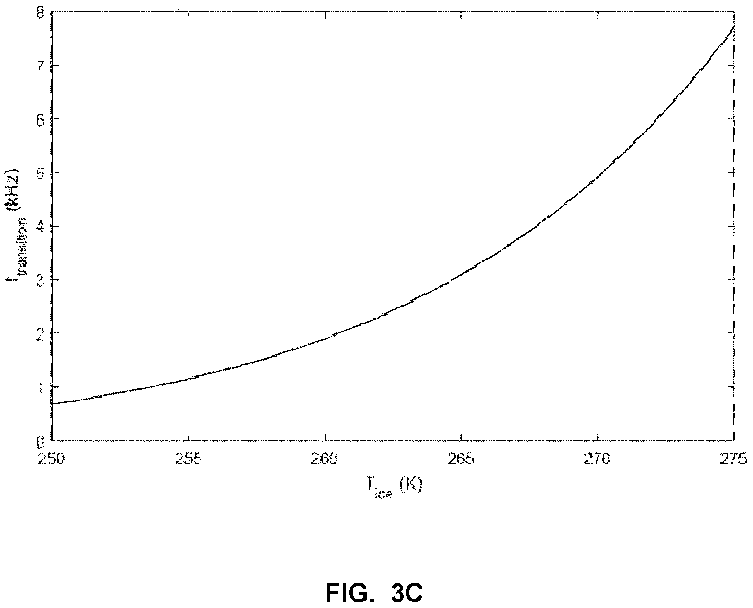

FIG. 3A is a graph showing relative dielectric permittivity of water (labelled 305) and the relative dielectric permittivity of ice at three different temperatures (labelled 310, 315, and 320) versus frequency. FIG. 3B is a graph showing dielectric relaxation time of ice versus temperature. The relative dielectric permittivity of ice (310, 315, 320) decreases from about 100 at lower frequencies to about 3 at higher frequencies. The transition frequency at which the relative dielectric permittivity of ice decreases from the low-frequency value to the highfrequency value is a function of temperature. FIG. 3C is a graph showing the transition frequency of ice versus temperature. Flowever, the relative dielectric permittivity of water (305) is the same at both the lower and the higher frequencies. This property may be used to distinguish between water and ice accumulation at the surface 105. In some embodiments, the AC excitation source 130 may provide a first AC excitation signal at a first frequency and a second AC excitation signal at a second frequency higher than the first frequency. For example, the first frequency may be IQ- 120 Hz and the second frequency may be 0.1-1 MHz. The processor 140 can determine the total amount of water and ice based on the first capacitance at the first frequency and the first capacitance at the second frequency. The first capacitance at the first frequency can be a strong function of both water and ice accumulated on the surface 105. However, the first capacitance at the second frequency can be a weak function of ice accumulated on the surface 105 and a strong function of water left on the surface 105. The processor 140 can determine a first difference in the first capacitance at the first frequency and the first capacitance at the second frequency. The determined first difference can provide an indication of relative proportions of ice and water on the surface and the processor 140 can determine whether the de-icing condition is satisfied partly based on the first difference. For example, the de-icing condition may not be satisfied if ice accumulated on the surface 105 has been melted with only water left on the surface 105. In response, the processor 140 can control the electrical current source 110 to not provide the PETD electrical current to the heating track 115.

In some embodiments, the AC excitation source 130 may provide a first AC excitation signal at a first frequency, a second AC excitation signal at a second frequency, and a third AC excitation signal at a third frequency. The second frequency may be higher than the first frequency and the third frequency may be an intermediate frequency between the first frequency and the second frequency. For example, the first frequency may be 10-100 Hz, the second frequency may be 0.1-1 MHz and the third frequency may be 0.1-100 kHz. The processor 140 can determine the total amount of water and ice based on the first capacitance at the first frequency, the first capacitance at the second frequency and the first capacitance at the third frequency. As shown in FIG. 3A, the first capacitance at the first frequency can be a strong function of both water and ice accumulated on the surface 105. Further, the first capacitance at the second frequency can be a weak function of ice accumulated on the surface 105 and a strong function of water left on the surface 105. The processor 140 can determine a difference in the first capacitance at the first frequency and the first capacitance at the second frequency. The determined difference can provide an indication of relative proportions of ice and water on the surface. The processor 140 can also determine differences in the first capacitance at the third frequency compared with the first capacitance at the first frequency and the first capacitance at the second frequency. Because the relative dielectric permittivity of ice can be a strong function of temperature at the third frequency (as shown in FIG. 3A), the determined differences can provide an indication of the temperature of the surface 105. The determined temperature of the surface 105 can be used by the processor 140 to determine the nature of the frozen accumulation on the surface 105. In some embodiments, the determined temperature of the surface 105 may be used to provide feedback control of the PETD electric current. The processor 140 can determine whether the de-icing condition is satisfied partly based on the determined differences in the first capacitance at the first frequency, second frequency and third frequency. For example, the de-icing condition may not be satisfied if ice accumulated on the surface 105 has been melted with only water left on the surface 105. In response to the de-icing condition not being satisfied, the processor 140 can control the electrical current source 110 to not provide the PETD electrical current to the heating track 115.

In some embodiments, the AC excitation source 130 may provide a first intermediate AC excitation signal at a first intermediate frequency and a second intermediate AC excitation signal at a second intermediate frequency. For example, the first intermediate frequency and the second intermediate frequency may be 0.1-100 kFIz. The processor 140 can determine the total amount of water and ice based on the first capacitance at the first intermediate frequency and the first capacitance at the second intermediate frequency. The processor 140 can also determine a second difference between the first capacitance at the first intermediate frequency and the first capacitance at the second intermediate frequency. Between the first intermediate frequency and the second intermediate frequency, the relative dielectric permittivity of ice changes based on the frequency and the temperature (as shown in FIG. 3A) while the relative dielectric permittivity of water does not change. Therefore, the determined second difference can provide an indication of relative proportions of ice and water on the surface 105, and a temperature of the surface 105. The processor 140 can determine whether the de-icing condition is satisfied partly based on the determined second difference. For example, the de-icing condition may not be satisfied if ice accumulated on the surface 105 has been melted with only water left on the surface 105. In response to the deicing condition not being satisfied, the processor 140 can control the electrical current source 110 to not provide the PETD electrical current to the heating track 115.

In some embodiments, the AC excitation source 130 provides excitation signals at multiple frequencies between a start frequency and a stop frequency. The processor 140 can determine the first capacitance at two or more of the multiple frequencies. As described above with reference to a first frequency and a second frequency or with reference to a first intermediate frequency and a second intermediate frequency, the processor 140 can determine whether the de-icing condition is satisfied partly based on the determined first capacitance at the two or more of the multiple frequencies.

In some embodiments, the system 100 includes a temperature sensor 155 for measuring a temperature of the surface 105. The temperature sensor 155 can be linked for communication with the processor 140. In operation, the processor determines whether the de-icing condition is satisfied partly based on the temperature of the surface. The temperature of the surface 105 can be used by the processor 140 to determine the nature of the frozen accumulation on the surface 105 or to provide feedback control of the PETD electric current.

In some embodiments, the surface 105 comprises the temperature sensor. In operation, the temperature sensor can provide an indication of a temperature of the surface 105 to the processor 140. Based at least partly on the detected temperature, the processor 140 can determine whether the de-icing condition is satisfied.

In some embodiments, a change in resistance of the heating track 115 can be detected and communicated to the processor 140. The change in resistance can provide an indication of a temperature of the surface 105 to the processor 140. Based at least partly on the detected temperature, the processor 140 can determine whether the de-icing condition is satisfied.

The relative dielectric permittivity of snow is proportional to the relative dielectric permittivity of ice. The proportional constant is based on the relative density of the snow compared with ice. Further, the frequency dependence of the relative dielectric permittivity of snow is the same as the frequency dependence of the relative dielectric permittivity of ice shown in FIG. 3A. For example, for snow density of 300kg/m<3>and ice density of 916kg/m<3>, the relative dielectric permittivity of snow would decrease from about 32 at the lower frequency range shown in FIG. 3A to just above 1 at the higher frequency range. This property may be used to distinguish between water, ice and snow accumulated at the surface 105 by performing first capacitance measurements at multiple frequencies. The detection of snow can be used to conserve energy because, compared with ice, snow requires less PETD energy and pulse duration for melting.

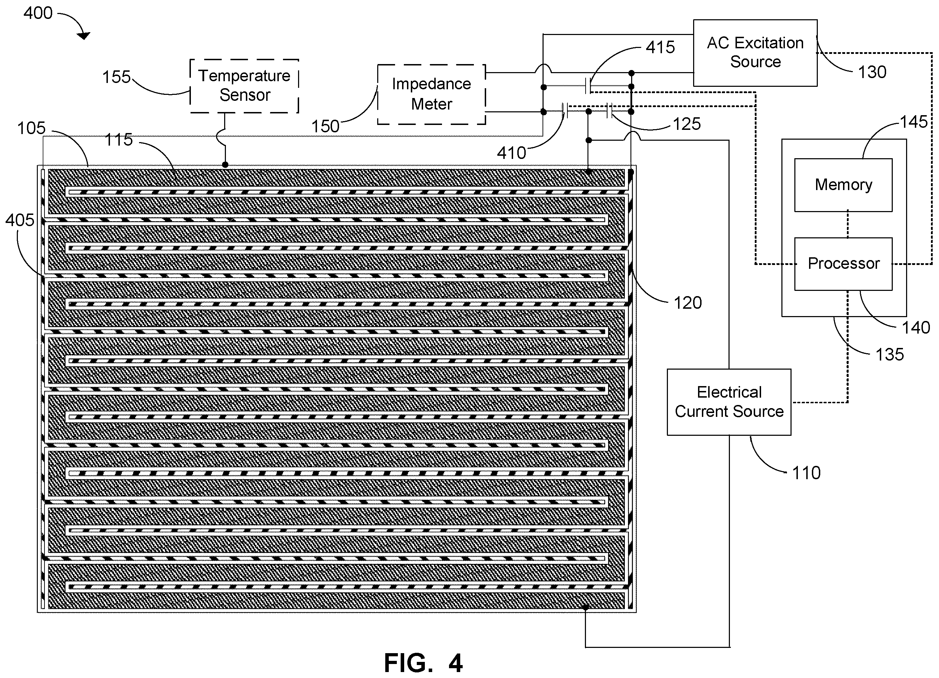

Reference is next made to FIG. 4 showing exemplary aspects of an embodiment of the system for detecting and removing ice from a surface. The system 400 of FIG. 4 can detect and remove ice from a surface 105. The system 400 includes an electrical current source 110, a heating track 115 provided at the surface 105, a first control track 120 provided at the surface 105, a second control track 405 provided at the surface 105, a first capacitor 125, a second capacitor 410, a third capacitor 415, an AC excitation source 130 and a control unit 135.

The heating track 115 is connected to the electrical current source 110. In operation, the electrical current source 110 can provide a PETD electrical current that flows through the heating track 115 to heat the heating track 115 and the surface 105. The heating track 115 may comprise a material selected partly based on its resistance. After the material has been processed to form the heating track, its resistance can be between 0.09 Ω·m⁻² and 9 Ω·m⁻² (1 ohm and 100 ohms per square foot).

The first control track 120 may be spaced from the heating track 115 to provide one electrode of the first capacitor 125. The heating track 115 can provide the other electrode of the first capacitor 125. The second control track 405 may be spaced from the heating track 115 to provide one electrode of the second capacitor 410. The heating track 115 can provide the other electrode of the second capacitor 410. FIG. 4 shows one example of the geometrical structure of the heating track 115, the first control track 120, the second control track 405 and the corresponding spacing between them. Other embodiments may use different geometrical structures. In operation, the first capacitance of the first capacitor 125, the second capacitance of the second capacitor 410, and the third capacitance of the third capacitor 415 can be measured in response to an AC excitation signal provided by the AC excitation source 130. The AC excitation source 130 may provide the AC excitation signal at one or more frequencies and the first capacitance, the second capacitance and the third capacitance can be measured at each of the one or more frequencies. In some embodiments, the system 400 switches between measuring the first capacitance, the second capacitance and the third capacitance.

The dielectric thickness of the first capacitor 125 corresponds to the spacing between the heating track 115 and the first control track 120. The dielectric thickness of the second capacitor 410 corresponds to the spacing between the heating track 115 and the second control track 405. The first capacitance of the first capacitor 125 and the second capacitance of the second capacitor 410 can be used to detect small amount of frozen accumulation because the corresponding dielectric spacing may be small and the resulting capacitance can be sensitive to small amounts of frozen accumulation. The dielectric thickness of the third capacitor 415 corresponds to the spacing between the first control track 120 and the second control track 405. The third capacitance of the third capacitor 415 can be used to detect larger amounts of frozen accumulation because the corresponding dielectric spacing may be larger (compared with the spacing between the heating track and one of the control tracks) and the resulting capacitance can be used to detect larger amounts of frozen accumulation. In some embodiments, the first capacitor 125 and the second capacitor 410 may be connected in parallel to provide a larger capacitance for detection of frozen accumulation.

The first capacitor 125 may include a first capacitor communication port for communicating the first capacitance to the control unit 135. The second capacitor 410 may include a second capacitor communication port for communicating the second capacitance to the control unit 135. The third capacitor 415 may include a third capacitor communication port for communicating the third capacitance to the control unit 135.

The control unit 135 includes a processor 140 and a memory 145. The processor 140 is communicatively coupled with the memory 145, the electrical current source 110, the AC excitation source 130, the first capacitor communication port of the first capacitor 125, the second capacitor communication port of the second capacitor 410 and the third capacitor communication port of the third capacitor 415. The processor 140 can control the AC excitation source 130 to provide an AC excitation signal to the first capacitor 125, the second capacitor 410 and the third capacitor 415 at one or more frequencies.

The memory 145 may store a de-icing condition. The de-icing condition may correspond to one or more of the first capacitance, the second capacitance and the third capacitance indicating that the amount of accumulated ice exceeds a threshold amount. The processor 140 can determine, at least partly from one or more of the first capacitance, the second capacitance and the third capacitance at the one or more frequencies, whether the de-icing condition is satisfied. When the de-icing condition is satisfied, the processor 140 can control the electrical current source 110 to provide the PETD electrical current to the heating track 115. When the de-icing condition is not satisfied, the processor 140 can control the electrical current source 110 to not provide the PETD electrical current to the heating track 115.

In some embodiments, the system 400 may include an impedance meter 150 for measuring one or more of the first capacitance, the second capacitance and the third capacitance. In operation, the AC excitation source 130 may provide an AC excitation signal to one or more of the first capacitor 125, the second capacitor 410 and the third capacitor 415 that induces a current through the corresponding capacitor. The impedance meter 150 can provide an indication of the corresponding capacitance based on a phase difference between the AC excitation signal and the induced current. The impedance meter 150 may provide the indication of the corresponding capacitance to the processor 140. The first capacitance, the second capacitance and the third capacitance may change based on the nature and amount of frozen accumulation on surface 105 and the impedance meter 150 can provide a corresponding indication. The de-icing condition may be based on an impedance meter indication corresponding to a threshold detected thickness of frozen accumulation, for example, 1mm thickness.

When the frozen accumulation thickness exceeds the threshold thickness, the de-icing condition may be satisfied and the processor 140 can control the electrical current source 110 to provide the PETD electrical current to the heating track 115. The resulting heating of surface 105 can cause the accumulated ice to melt. After the detected thickness of accumulated ice falls below the threshold thickness, the de-icing condition may no longer be satisfied and the processor 140 can control the electrical current source 110 to not provide the PETD electrical current to the heating track 115.

In some embodiments, the system 400 may include a bridge circuit 200 for measuring one or more of the first capacitance, the second capacitance and the third capacitance. The bridge circuit 200 may comprise a first branch 205 that includes the corresponding capacitor (for example, the first capacitor 125) and a second branch 210. Each of the first branch 205 and the second branch 210 may be connectable in parallel to i) at least one current delivery connector for delivering the AC excitation signal from the AC excitation source 130, and ii) at least one current delivery connector for returning the AC excitation signal to the AC excitation source 130.

In operation, at a first time, the AC excitation source 130 may provide an AC excitation signal and the bridge circuit 200 can be balanced for the capacitance corresponding to a no accumulated ice condition. At a second time corresponding to an accumulated ice condition, the AC excitation source 130 again provides an AC excitation signal and the bridge circuit 200 may become unbalanced because of an increase in the corresponding (first, second, or third) capacitance (corresponding to the accumulated ice). The degree of unbalance can provide an indication of the increase in the corresponding capacitance thereby providing an indication of the amount of accumulated ice. The de-icing condition stored in memory 145 can be based on the degree of unbalance of the bridge circuit 200. When the de-icing condition is satisfied, the processor 140 can control the electrical current source 110 to provide the PETD electrical current to the heating track 115. The resulting heating of surface 105 can cause the accumulated ice to melt. After the accumulated ice has been melted and removed, the corresponding capacitance may decrease back to the no accumulated ice condition and the bridge circuit 200 may become balanced again. When the de-icing condition is no longer satisfied, the processor 140 can control the electrical current source 110 to not provide the PETD electrical current to the heating track 115. In some embodiments, the bridge circuit 200 may be balanced after every de icing. In other embodiments, the bridge circuit 200 may be balanced at regular time intervals, for example, once a day or once a week.

In some embodiments, the AC excitation source 130 may provide a first AC excitation signal at a first frequency and a second AC excitation signal at a second frequency higher than the first frequency. For example, the first frequency may be IQ- 120 Hz and the second frequency may be 0.1-1 MHz. The processor 140 can determine the total amount of water and ice based on one or more of the first capacitance, the second capacitance and the third capacitance at the first and the second frequency based on the relations between the relative dielectric permittivity of water and ice on the one hand, and frequency, on the other hand, shown in FIG. 3A.

The corresponding capacitance (the first capacitance, the second capacitance, or the third capacitance) at the first frequency can be a strong function of both water and ice accumulated on the surface 105. However, the corresponding capacitance at the second frequency can be a weak function of ice accumulated on the surface 105 and a strong function of water left on the surface 105. The processor 140 can determine a first difference in the corresponding capacitance at the first frequency and the corresponding capacitance at the second frequency. The determined first difference can provide an indication of relative proportions of ice and water on the surface and the processor 140 can determine whether the de-icing condition is satisfied partly based on the first difference. For example, the de-icing condition may not be satisfied if ice accumulated on the surface 105 has been melted with only water left on the surface 105. In response, the processor 140 can control the electrical current source 110 to not provide the PETD electrical current to the heating track 115.

In some embodiments, the AC excitation source 130 may provide a first AC excitation signal at a first frequency, a second AC excitation signal at a second frequency, and a third AC excitation signal at a third frequency. This first AC excitation signal at the first frequency, the second AC excitation signal at the second frequency, and the third AC excitation signal at the third frequency can be provided to one or more of the first capacitor 125, the second capacitor 410 and the third capacitor 415. The second frequency may be higher than the first frequency and the third frequency may be an intermediate frequency between the first frequency and the second frequency.

For example, the first frequency may be 10-100 Hz, the second frequency may be 0.1- 1 MHz and the third frequency may be 0.1-100 kHz. The processor 140 can determine the total amount of water and ice based on one or more of the first capacitance, the second capacitance and the third capacitance at the first, the second, and the third frequency. The corresponding capacitance (the first capacitance, the second capacitance, or the third capacitance) at the first frequency can be a strong function of both water and ice accumulated on the surface 105. Further, the corresponding capacitance at the second frequency can be a weak function of ice accumulated on the surface 105 and a strong function of water left on the surface 105. The processor 140 can determine a difference in the corresponding capacitance at the first frequency and at the second frequency. The determined difference can provide an indication of relative proportions of ice and water on the surface. The processor 140 can also determine differences in the corresponding capacitance at the third frequency compared with the corresponding capacitance at the first frequency and the corresponding capacitance at the second frequency. Because the relative dielectric permittivity of ice can be a strong function of temperature at the third frequency (as shown in FIG. 3A), the determined differences can provide an indication of the temperature of the surface 105. The determined temperature of the surface 105 can be used by the processor 140 to determine the nature of the frozen accumulation on the surface 105. In some embodiments, the determined temperature of the surface 105 may be used to provide feedback control of the PETD electric current. The processor 140 can determine whether the de-icing condition is satisfied partly based on the determined differences in the corresponding capacitance at the first frequency, second frequency and third frequency. For example, the de-icing condition may not be satisfied if ice accumulated on the surface 105 has been melted with only water left on the surface 105. In response to the de-icing condition not being satisfied, the processor 140 can control the electrical current source 110 to not provide the PETD electrical current to the heating track 115.

In some embodiments, the AC excitation source 130 may provide a first intermediate AC excitation signal at a first intermediate frequency and a second intermediate AC excitation signal at a second intermediate frequency. For example, the first intermediate frequency and the second intermediate frequency may be 0.1-100 kHz. The processor 140 can determine the total amount of water and ice based on one or more of the first capacitance, the second capacitance and the third capacitance at the first intermediate frequency and at the second intermediate frequency. The processor 140 can also determine a second difference between the corresponding capacitance (the first capacitance, the second capacitance, or the third capacitance) at the first intermediate frequency and the corresponding capacitance at the second intermediate frequency. Between the first intermediate frequency and the second intermediate frequency, the relative dielectric permittivity of ice changes based on the frequency and the temperature (as shown in FIG. 3A) while the relative dielectric permittivity of water does not change. Therefore, the determined second difference can provide an indication of relative proportions of ice and water on the surface 105, and a temperature of the surface 105. The processor 140 can determine whether the de-icing condition is satisfied partly based on the determined second difference. For example, the de-icing condition may not be satisfied if ice accumulated on the surface 105 has been melted with only water left on the surface 105. In response to the de-icing condition not being satisfied, the processor 140 can control the electrical current source 110 to not provide the PETD electrical current to the heating track 115.

In some embodiments, the AC excitation source 130 provides excitation signals at multiple frequencies between a start frequency and a stop frequency. The processor 140 can determine one or more of the first capacitance, the second capacitance and the third capacitance at two or more of the multiple frequencies. As described above with reference to a first frequency and a second frequency or with reference to a first intermediate frequency and a second intermediate frequency, the processor 140 can determine whether the de-icing condition is satisfied partly based on the determined one or more of the first capacitance, the second capacitance and the third capacitance at the two or more of the multiple frequencies.

In some embodiments, the system 400 includes a temperature sensor 155 for measuring a temperature of the surface 105. The temperature sensor 155 can be linked for communication with the processor 140. In operation, the processor determines whether the de-icing condition is satisfied partly based on the temperature of the surface. The temperature of the surface 105 can be used by the processor 140 to determine the nature of the frozen accumulation on the surface 105 or to provide feedback control of the PETD electric current.

In some embodiments, the surface 105 comprises the temperature sensor. In operation, the temperature sensor can provide an indication of a temperature of the surface 105 to the processor 140. Based at least partly on the detected temperature, the processor 140 can determine whether the de-icing condition is satisfied.

In some embodiments, a change in resistance of the heating track 115 can be detected and communicated to the processor 140. The change in resistance can provide an indication of a temperature of the surface 105 to the processor 140. Based at least partly on the detected temperature, the processor 140 can determine whether the de-icing condition is satisfied.

The relative dielectric permittivity of snow is proportional to the relative dielectric permittivity of ice. The proportional constant is based on the relative density of the snow compared with ice. Further, the frequency dependence of the relative dielectric permittivity of snow is the same as the frequency dependence of the relative dielectric permittivity of ice shown in FIG. 3A. This property may be used to distinguish between water, ice and snow accumulated at the surface 105 by performing measurements of one or more of the first capacitance, the second capacitance and the third capacitance at multiple frequencies. The detection of snow can be used to conserve energy because, compared with ice, snow requires less PETD energy and pulse duration for melting.

In some embodiments, the system for detecting and removing ice may also include a smart surface that can be added to a surface from which the ice needs to be detected and removed. The smart surface may be added to any metallic or non-metallic surface from which ice needs to be detected and removed. For example, the surface 105 of system 100 in FIG. 1 or the surface 105 of system 400 in FIG. 4 may be the smart surface. In some embodiments, the smart surface may be built inside another surface. For example, a smart surface can be built inside a critical airplane surface like its wings or inside an ice mold or inside a vaporizer tank wall. In some embodiments, the smart surface may be added to a surface by modifying the surface to be a smart surface having a heating track and control track by, for example, depositing, etching or painting using a conductive ink.

In some embodiments, the smart surface may comprise an ultra-thin and flexible printed circuit board (PCB) that includes integrated a heating track and control track. In some embodiments, the smart surface may be highly flexible, and the shape and curvature of the smart surface may be customizable to any shape or curvature depending on the surface from which ice needs to be detected and removed. The smart surface may comprise a material capable of handling the high power and pulsing pattern associated with the PETD electrical current. For example, the smart surface material may include one or more of Grafoil^{®} flexible graphite, hardened multipurpose 304 stainless steel, ultra-thin titanium nanofoil, titanium foil, nickel chromium foil, flexible PCB, EMS^{®} CI -2042, DuPont^{®} 7102 and DuPont^{®} 8144.

In some embodiments, the smart surface may comprise one or more surface modules. The modularity can enable the smart surface to be added to any large surface (from which ice needs to be detected and removed) of any shape or curvature. The surface modules may include busbars for coupling each surface module to at least one other surface module. The surface modules can each include a portion of the heating track and the multiple portions of the heating track can be configured to be coupled together to form the heating track. The heating tracks may be coupled together in series or in parallel across the electrical current source. In some embodiments, the surface modules may each include a portion of a control track and the multiple portions of the control track can be configured to be coupled together to form the control track. In some embodiments, the surface modules may be independent. That is, each surface module may comprise its own control track and/or heating track that can enable that control unit to detect and remove frozen accumulation from each surface module independent of the other surface modules. The independent control may improve energy efficiency because the PETD electrical current is only provided to localized areas of the smart surface where frozen accumulation is detected instead of providing the PETD electrical current to the entire smart surface.

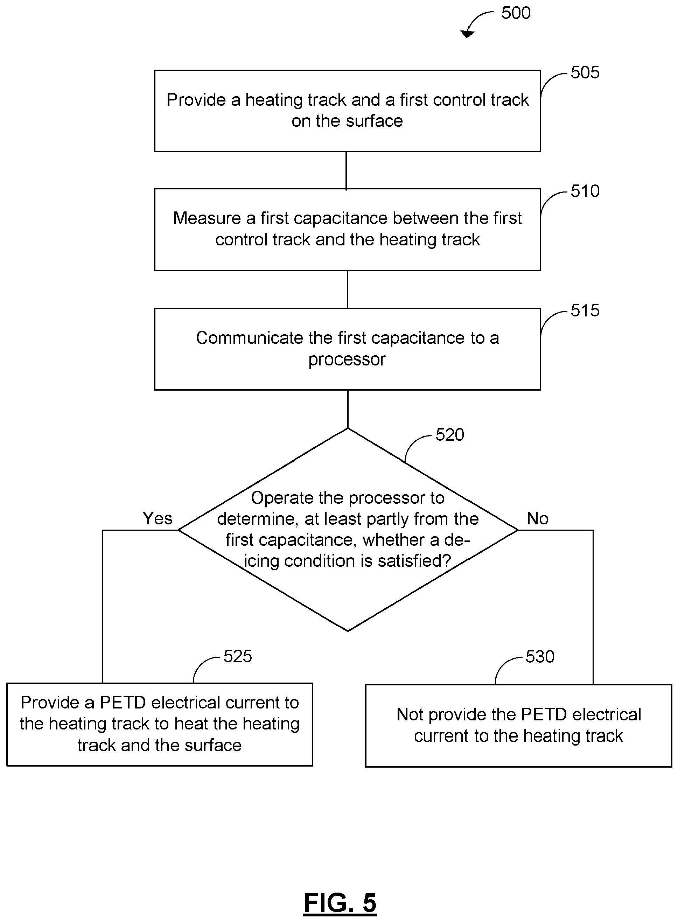

FIG. 5 is a flow chart illustrating an exemplary methodology 500 for detecting and removing ice from a surface. The exemplary methodology may be performed, for example, using the system 100 described in FIG. 1 or the system 400 described in FIG. 4.

In step 505 of method 500 shown in FIG. 5, a heating track and a first control track are provided on the surface. For example, the heating track 115 and the first control track 120 may be provided on the surface 105.

In step 510, a first capacitance between the first control track and the heating track is measured. For example, the first capacitance of the first capacitor 125 can be measured in response to an AC excitation signal provided by the AC excitation source 130. The first capacitance can change based on the nature and amount of frozen accumulation on the surface 105 and measurements of the first capacitance can be used to monitor the nature and amount of frozen accumulation.

In step 515, the first capacitance is communicated to a processor. For example, the first capacitor 125 may communicate the first capacitance to the processor 140 using the first capacitor communication port.

In step 520, the processor determines, at least partly from the first capacitance, whether a de-icing condition is satisfied. For example, the de-icing condition may correspond to the first capacitance indicating that the amount of accumulated ice on the surface 105 exceeds a threshold amount. The processor 140 can determine, at least partly from the first capacitance, whether the de-icing condition is satisfied.

When the de-icing condition is satisfied, the method 500 proceeds to step 525. In step 525, a PETD electrical current is provided to the heating track to heat the heating track and the surface. For example, when the de-icing condition is satisfied, the processor 140 can control the electrical current source 110 to provide the PETD electrical current to the heating track 115 to heat the heating track 115 and the surface 105.

When the de-icing condition is not satisfied, the method 500 proceeds to step 530. In step 530, no PETD electrical current is provided to the heating track. For example, when the deicing condition is not satisfied, the processor 140 can control the electrical current source 110 to not provide the PETD electrical current to the heating track 115. In some embodiments, the method 500 further comprises providing a second control track on the surface; measuring a second capacitance between the second control track and the heating track; measuring a third capacitance between the first control track and the second control track; and communicating the second capacitance and the third capacitance to the processor, wherein, operating the processor to determine whether the de-icing condition is satisfied is partly based on the second capacitance and the third capacitance. For example, a second control track 405 can be provided at the surface 105 as shown in FIG. 4. The second capacitance of the second capacitor 410 and the third capacitance of the third capacitor 415 can be measured and communicated to the processor 140. The processor 140 can determine whether the de icing condition is satisfied is partly based on the second capacitance and the third capacitance.

In some embodiments, the method 500 further comprises detecting a change in resistance of the heating track; and communicating to the processor the change in resistance of the heating track; wherein, operating the processor to determine whether the de-icing condition is satisfied is partly based on the change in resistance of the heating track. For example, a change in resistance of the heating track 115 can be detected and communicated to the processor 140. The change in resistance can provide an indication of a temperature of the surface 105 to the processor 140. Based at least partly on the change in resistance of the heating track 115, the processor 140 can determine whether the de-icing condition is satisfied. In some embodiments, the method 500 comprises providing an indication of a temperature of the surface 105 to the processor 140 using a temperature sensor, for example, the temperature sensor 155 shown in FIGS. 1 and 4. Based at least partly on the indicated temperature of the surface 105, the processor 140 can determine whether the de-icing condition is satisfied.

In some embodiments, the method 500 further comprises providing an AC excitation signal to the first capacitor at one or more frequencies, wherein, the AC excitation signal induces a first current through the first capacitor; and wherein, operating the processor to determine whether the de-icing condition is satisfied is partly based on the first capacitance at the one or more frequencies. For example, the AC excitation source 130 can provide an AC excitation signal to the first capacitor 125 at one or more frequencies. The AC excitation signal can induce a first current through the first capacitor 125. The corresponding first capacitance at the one or more frequencies can change based on the nature and amount of frozen accumulation on the surface 105. The processor 140 can determine whether the de-icing condition is satisfied partly based on the first capacitance at the one or more frequencies.

In some embodiments, providing the AC excitation signal comprises providing a first excitation signal at a first frequency and a second excitation signal at a second frequency higher than the first frequency. The method further comprises operating the processor to determine a first difference in the first capacitance at the first frequency and the first capacitance at the second frequency, the first difference providing an indication of relative proportions of ice and water on the surface; and operating the processor to determine whether the de-icing condition is satisfied is partly based on the first difference. For example, the AC excitation source 130 may provide a first AC excitation signal at a first frequency and a second AC excitation signal at a second frequency higher than the first frequency. The first frequency may be 10-120 Hz and the second frequency may be 0.1-1 MHz. The processor 140 can determine a first difference in the first capacitance at the first frequency and the first capacitance at the second frequency. The determined first difference can provide an indication of relative proportions of ice and water on the surface 105 and the processor 140 can determine whether the de-icing condition is satisfied partly based on the first difference.

In some embodiments, providing the AC excitation signal comprises providing a third excitation signal at a third frequency and differences between the first capacitance at the first frequency, the first capacitance at the second frequency and the first capacitance at the third frequency provide an indication of relative proportions of ice and water on the surface to the processor. The differences in the first capacitance may also provide an indication of a temperature of the surface to the processor. Further, operating the processor to determine whether the de-icing condition is satisfied is partly based on the differences in the first capacitance. For example, the AC excitation source 130 may provide a first AC excitation signal at a first frequency, a second AC excitation signal at a second frequency, and a third AC excitation signal at a third frequency. The second frequency may be higher than the first frequency and the third frequency may be an intermediate frequency between the first frequency and the second frequency.

The first frequency may be 10-100 Hz, the second frequency may be 0.1-1 MHz and the third frequency may be 0.1-100 kHz. The processor 140 can determine differences in the first capacitance at the third frequency compared with the first capacitance at the first frequency and the first capacitance at the second frequency. Because the relative dielectric permittivity of ice can be a strong function of temperature at the third frequency and the relative dielectric permittivity of water does not change with temperature at the third frequency, the determined differences can provide an indication of relative proportions of ice and water on the surface 105 and the temperature of the surface 105.

In some embodiments, providing the AC excitation signal comprises providing a first intermediate excitation signal at a first intermediate frequency and a second intermediate excitation signal at a second intermediate frequency, wherein the first intermediate frequency and the second intermediate frequency are 0.1-100 kHz. The method 500 further comprises operating the processor to determine a second difference between the first capacitance at the first intermediate frequency and the first capacitance at the second intermediate frequency, the second difference providing an indication of relative proportions of ice and water on the surface, and a temperature of the surface; and operating the processor to determine whether the de-icing condition is satisfied is partly based on the second difference. For example, the AC excitation source 130 may provide a first intermediate AC excitation signal at a first intermediate frequency and a second intermediate AC excitation signal at a second intermediate frequency. The processor 140 can determine a second difference between the first capacitance at the first intermediate frequency and the first capacitance at the second intermediate frequency. Between the first intermediate frequency and the second intermediate frequency, the relative dielectric permittivity of ice changes based on the frequency and the temperature while the relative dielectric permittivity of water does not change. Therefore, the determined second difference can provide an indication of relative proportions of ice and water on the surface 105, and a temperature of the surface 105. The processor 140 can determine whether the de-icing condition is satisfied partly based on the determined second difference.

In some embodiments, providing the AC excitation signal comprises providing excitation signals at multiple frequencies between a start frequency and a stop frequency. The method 500 further comprises operating the processor to determine the first capacitance at two or more of the multiple frequencies; and operating the processor to determine whether the deicing condition is satisfied is partly based on the determined first capacitance at the two or more of the multiple frequencies. For example, the AC excitation source 130 provides excitation signals at multiple frequencies between a start frequency and a stop frequency. The processor 140 can determine the first capacitance at two or more of the multiple frequencies. Further, the processor 140 can determine whether the de-icing condition is satisfied partly based on the determined first capacitance at the two or more of the multiple frequencies.

In some embodiments, the method 500 may further comprise providing an indication of the first capacitance based on a phase difference, measured by an impedance meter, between the excitation signal and the first current.

In some embodiments, the method 500 may further comprise providing an indication of the first capacitance based on an imbalance in electric potential between a first branch and a second branch of a bridge circuit, wherein each of the first branch and the second branch are connected in parallel across an AC excitation source that provides the AC excitation signal, and the first branch includes the first capacitor.

In some embodiments, the method 500 may further comprise switching between measuring the first capacitance, the second capacitance and the third capacitance.

The method 500 may be repeated multiple times, as required. For example, when frozen accumulation is first detected on the surface or the de-icing condition is satisfied, the method 500 may be activated and then repeated until the de-icing condition is no longer satisfied.

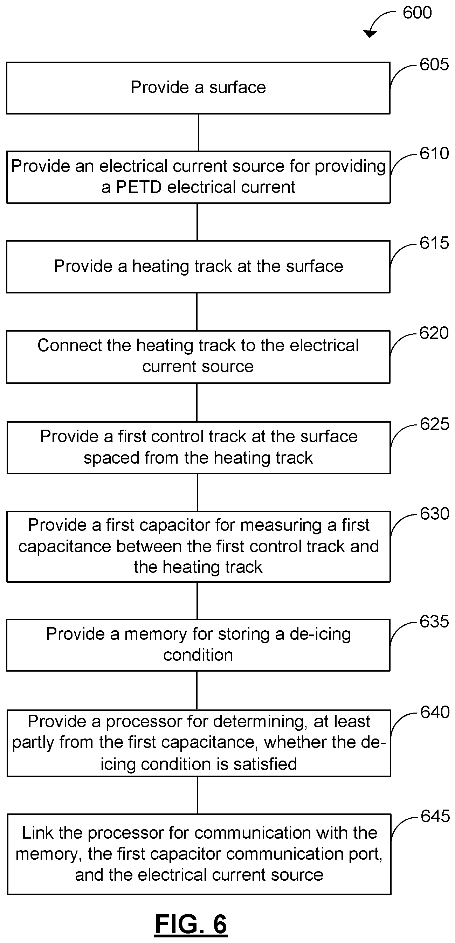

FIG. 6 is a flow chart illustrating an exemplary methodology 600 for providing a smart surface for detecting and removing ice. The exemplary methodology 600 may be performed, for example, for providing a smart surface 105 using the system 100 described in FIG. 1 , or the system 400 described in FIG. 4. It may also be performed by modifying an existing surface to be a smart surface.

In step 605 of method 600 shown in FIG. 6, a surface is provided, for example, the surface 105. In step 610, an electrical current source for providing a PETD electrical current is provided, for example, electrical current source 110. In step 615, a heating track is provided at the surface. For example, a heating track 115 may be provided at the surface 105. In step 620, the heating track is connected to the electrical current source, wherein, in operation, the electrical current flows through the heating track to heat the heating track and the surface. For example, the heating track 115 may be connected to the electrical current source 110.

In step 625, a first control track is provided at the surface spaced from the heating track, for example, the first control track 120. In step 630, a first capacitor is provided for measuring a first capacitance between the first control track and the heating track, the first capacitor comprising a first capacitor communication port for communicating the first capacitance. For example, the first capacitor 125 may be provided for measuring the first capacitance.

In step 635, a memory is provided for storing a de-icing condition, for example, the memory 145. In step 640, a processor is provided for determining, at least partly from the first capacitance, whether the de-icing condition is satisfied. For example, the processor 140 may be provided.

In step 645, the processor is linked for communication with the memory, the first capacitor communication port, and the electrical current source. In operation, the processor controls the electrical current source to, when the deicing condition is satisfied, provide the pulse-electro thermal deicing electrical current to the heating track; and when the deicing condition is not satisfied, not provide the pulse-electro thermal deicing electrical current to the heating track. For example, the processor 140 can control the electrical current source 110 to provide the PETD electrical current to the heating track 115 when the deicing condition is satisfied. The processor 140 can control the electrical current source 110 to not provide the PETD electrical current to the heating track 115 when the deicing condition is not satisfied. The skilled person in the art will appreciate that the first capacitor 125, second capacitor 410 and third capacitor 415 illustrated in Figs. 1 and 4 are only shown as separate elements to better illustrate how each capacitor is coupled or connected to the other elements of the system (for example the impedance meter 150, the AC excitation source 130 or the processor 140 of the control unit 135, etc.), but that, as already described above, these do not represent additional elements that are distinct from the heating track 115, the first control track 120 and the second control track 405, but rather that the first capacitor 125 is formed by first control track 120 and the heating track 115, the second capacitor 410 is formed by the second control track 405 and the heating track 115, and that the third capacitor 415 is formed by the first control track 120 and the second control track 405.

The skilled person in the art will also understand that the communication ports described above, namely the first capacitor communication port of the first capacitor 125, the second capacitor communication port of the second capacitor 410 and the third capacitor communication port of the third capacitor 415, are meant to include any type of electrical links, couplings or connections, direct or indirect, between each capacitor and the impedance meter 150 and/or the processor 140, without restriction.

What has been described above has been intended to be illustrative of the invention and non-limiting and it will be understood by persons skilled in the art that other variants and modifications may be made without departing from the scope of the invention as defined in the claims appended hereto.

**In** some embodiments, the first control track 120 and/or the second control track 405 may be coupled or connected to the current source 110 so as to also receive therefrom the **PETD** electrical current and thus also act as additional heating tracks. Thus, in some embodiments, at least one of first control track 120 and second control track 405 may be connected to the current source 110 and the heating track 115, in parallel or in series, so as to receive simultaneously the **PETD** electrical current so as to increase the coverage of the surface heated by the system.

## Claims

1. A system (100) for detecting and removing frozen accumulation from a surface (105), the system comprising:
an electrical current source (110) for providing a pulse-electro thermal de-icing (PEDT) electrical current;
a heating track (115) provided at the surface and coupled to the electrical current source, wherein, in operation, the PEDT electrical current flows through the heating track to heat via resistive heating the heating track so as to melt, at least in part, the frozen accumulation from the surface;
a first control track (120) provided at the surface spaced from the heating track, the heating track and the first control track forming a first capacitor (125) for measuring a first capacitance between the first control track and the heating track;
a memory (145) for storing a de-icing condition; and
a processor (140) for determining, at least partly from the first capacitance, whether the de-icing condition is satisfied, the processor being linked to the memory, the first capacitor, and the electrical current source, wherein, in operation, the processor controls the electrical current source to:
provide the PEDT electrical current to the heating track when the de-icing condition is satisfied; and
not provide the PEDT electrical current to the heating track when the de-icing condition is not satisfied.

2. The system as defined in claim 1 further comprising:
a second control track (405) provided at the surface spaced from the heating track;
the second control track and the heating track forming a second capacitor (410) for measuring a second capacitance between the second control track and the heating track, the second capacitor comprising a second capacitor communication port for communicating the second capacitance to the processor; and
the first control track and the second control track forming a third capacitor (415) for measuring a third capacitance between the first control track and the second control track, the third capacitor comprising a third capacitor communication port for communicating the third capacitance to the processor;
wherein, in operation, the processor determines whether the de-icing condition is satisfied partly based on the second capacitance and the third capacitance.

3. The system as defined in claim 1 further comprising at least one temperature sensor (155) for measuring a temperature of the surface (105), wherein the at least one temperature sensor is linked for communication with the processor (140), and, in operation, the processor determines whether the de-icing condition is satisfied partly based on the temperature of the surface.

4. The system as defined in claim 1, wherein, in operation, a change in resistance of the heating track (115) provides an indication of a temperature of the surface to the processor and the processor determines whether the de-icing condition is satisfied partly based on the temperature of the surface.

5. The system as defined in claim 1 wherein, the surface (105) comprises a temperature sensor and in operation, the temperature sensor provides an indication of a temperature of the surface to the processor and the processor determines whether the deicing condition is satisfied partly based on the temperature of the surface.

6. The system as defined in claim 1, wherein the heating track (115) comprises a material selected partly based on its resistance, wherein the resistance is between 0.09 Ω· m⁻² and 9 Ω·m⁻² (1 ohm and 100 ohms per square foot) after the material has been processed to form the heating track.

7. The system as defined in claim 1 further comprising an AC excitation source (130) for providing an AC excitation signal to the first capacitor at one or more frequencies, wherein, in operation:
the AC excitation signal induces a first current through the first capacitor; and
the processor determines whether the de-icing condition is satisfied partly based on the first capacitance at the one or more frequencies.

8. A method of detecting and removing frozen accumulation from a surface (105), the method comprising:
measuring a first capacitance between a first control track (120) and a heating track (115), each of the heating track and the first control track being provided on the surface, the first control track being spaced from the heating track, the heating track and the first control track forming a first capacitor (125);
communicating the first capacitance to a processor (140);
operating the processor to determine, at least partly from the first capacitance, whether a de-icing condition is satisfied;
providing a pulse-electro thermal de-icing (PETD) electrical current to the heating track to heat via resistive heating the heating track and the surface when the de-icing condition is satisfied; and
not providing the **PETD** electrical current to the heating track when the de-icing condition is not satisfied.

9. The method as defined in claim 8 further comprising:
measuring a second capacitance (410) between a second control track (405) provided on the surface (105) and the heating track (115), the second control track being provided on the surface and spaced from the heating track and the first control track (120);
measuring a third capacitance (415) between the first control track and the second control track; and
communicating the second capacitance and the third capacitance to the processor;
wherein, operating the processor (140) to determine whether the de-icing condition is satisfied is partly based on the second capacitance and the third capacitance.

10. The method as defined in claim 8 further comprising detecting a change in resistance of the heating track (115); and
communicating to the processor (140) the change in resistance of the heating track;
wherein, operating the processor to determine whether the de-icing condition is satisfied is partly based on the change in resistance of the heating track.

11. The method as defined in claim 8 further comprising:
providing an AC excitation signal to the first capacitor (125) at one or more frequencies, wherein the AC excitation signal induces a first current through the first capacitor; and
wherein operating the processor (140) to determine whether the de-icing condition is satisfied is partly based on the first capacitance at the one or more frequencies.

12. The method as defined in claim 8, further comprising:
providing an electrical current source (110) for providing the PETD electrical current;
providing a memory for storing the de-icing condition; linking the processor for communication with the memory, the first capacitor, and the electrical current source.

13. A non-transitory computer-readable medium, the computer-readable medium including instructions for detecting and removing frozen accumulation from a surface (105) that when executed by a processor (140), cause the system of claim 1 to:
receive a first capacitance measured between a first control track and a heating track, each of the heating track (115) and the first control track (120) being provided on the surface, the first control track spaced from the heating track, the heating track and the first control track forming a first capacitor (125);
determine, at least partly from the first capacitance, whether a de-icing condition is satisfied;
provide via an electrical current source (110) a pulse-electro thermal de-icing (PETD) electrical current to the heating track to heat the heating track and the surface to removing the frozen accumulation from the surface when the de-icing condition is satisfied; and
not provide the PETD electrical current to the heating track when the de-icing condition is not satisfied.

14. The non-transitory computer-readable medium of claim 13, the instructions further causing the processor (140) to:
receive a second capacitance measured between a second control track (405) provided on the surface and the heating track, the second control track spaced from the heating track and the first control track (120);
receive a third capacitance measured between the first control track and the second control track; and
wherein said processor determines whether the de-icing condition is satisfied is partly based on the second capacitance and the third capacitance.

15. The non-transitory computer-readable medium of claim 13, the instructions further causing the processor (140) to:
receive a detected change in resistance of the heating track (115); and
wherein said determination whether the de-icing condition is satisfied is partly based on the change in resistance of the heating track.

## Patentansprüche

1. System (100) zum Erkennen und Entfernen von gefrorenen Ablagerungen auf einer Oberfläche (105), das System umfassend:
Eine elektrische Stromquelle (110) für das Bereitstellen eines elektrischen Stroms für die pulsierende elektrothermische Enteisung (PETD);
einen Heizleiter (115), der an der Oberfläche bereitgestellt und mit der elektrischen Stromquelle gekoppelt ist, wobei im Betrieb der elektrische PETD-Strom durch den Heizleiter fließt, um über eine Widerstandsheizung den Heizleiter aufzuheizen, um die gefrorene Ablagerung auf der Oberfläche mindestens teilweise zu schmelzen;
einen ersten Steuerleiter (120), der an der Oberfläche beabstandet von dem Heizleiter bereitgestellt ist, wobei der Heizleiter und der erste Steuerleiter einen ersten Kondensator (125) zum Messen einer ersten Kapazitanz zwischen dem ersten Steuerleiter und dem Heizleiter bilden;
einen Speicher (145), um die Enteisungsbedingung zu speichern; und
einen Prozessor (140), um mindestens teilweise aus der ersten Kapazitanz zu bestimmen, ob die Enteisungsbedingung erfüllt ist, wobei der Prozessor mit dem Speicher, dem ersten Kondensator und der elektrischen Stromquelle verbunden ist, wobei der Prozessor im Betrieb die elektrische Stromquelle so regelt, dass:
Der elektrische PETD-Strom dem Heizleiter bereitgestellt wird, wenn die Enteisungsbedingung erfüllt ist; und
der elektrische PETD-Strom dem Heizleiter nicht bereitgestellt wird, wenn die Enteisungsbedingung nicht erfüllt ist.

2. System nach Anspruch 1, ferner umfassend:
Einen zweiten Steuerleiter (405), der beabstandet von dem Heizleiter an der Oberfläche bereitgestellt wird;
der zweite Steuerleiter und der Heizleiter bilden einen zweiten Kondensator (410) zum Messen einer zweiten Kapazitanz zwischen dem zweiten Steuerleiter und dem Heizleiter, wobei der zweite Kondensator einen zweiten Kondensator-Kommunikationsanschluss umfasst, um die zweite Kapazitanz mit dem Prozessor in Verbindung zu setzen; und
der erste Steuerleiter und der zweite Steuerleiter bilden einen dritten Kondensator (415) zum Messen einer dritten Kapazitanz zwischen dem ersten Steuerleiter und dem zweiten Steuerleiter, wobei der dritte Kondensator einen dritten Kondensator-Kommunikationsanschluss umfasst;
wobei im Betrieb der Prozessor bestimmt, ob die Enteisungsbedingung erfüllt ist, teilweise basierend auf der zweiten Kapazitanz und der dritten Kapazitanz.

3. System nach Anspruch 1 ferner umfassend mindestens einen Temperatursensor (155) zum Messen einer Temperatur der Oberfläche (105), wobei der mindestens eine Temperatursensor für die Kommunikation mit dem Prozessor (140) verbunden ist, und im Betrieb der Prozessor bestimmt, ob die Enteisungsbedingung teilweise basierend auf der Temperatur der Oberfläche erfüllt ist.

4. System nach Anspruch 1, wobei im Betrieb eine Änderung im Widerstand des Heizleiters (115) dem Prozessor eine Angabe zur Oberflächentemperatur bereitstellt und der Prozessor bestimmt, ob die Enteisungsbedingung teilweise basierend auf der Temperatur der Oberfläche erfüllt ist.

5. System nach Anspruch 1 wobei die Oberfläche (105) einen Temperatursensor umfasst und im Betrieb der Temperatursensor dem Prozessor eine Angabe zu einer Oberflächentemperatur bereitstellt und der Prozessor bestimmt, ob die Enteisungsbedingung teilweise basierend auf der Temperatur der Oberfläche erfüllt ist.

6. System nach Anspruch 1, wobei der Heizleiter (115) ein Material umfasst, das teilweise basierend auf seinem Widerstand ausgewählt ist, wobei der Widerstand zwischen 0,09 Ω·m⁻² und 9 Ω·m⁻² (1 Ohm und 100 Ohm pro Quadratfuß) liegt, sobald das Material bearbeitet wurde, um den Heizleiter zu bilden.

7. System nach Anspruch 1, ferner umfassend eine Wechselstrom-Erregerquelle (130), um dem ersten Kondensator ein Wechselstrom-Erregersignal in einer oder mehreren Frequenzen bereitzustellen, wobei im Betrieb:
Das Wechselstrom-Erregersignal einen ersten Strom über den ersten Kondensator induziert; und
wobei der Prozessor bestimmt, ob die Enteisungsbedingung erfüllt ist, teilweise basierend auf der einen oder den mehreren Frequenzen.

8. Verfahren zum Erkennen und Entfernen von gefrorenen Ablagerungen auf einer Oberfläche (105), das Verfahren umfassend:
Messen einer ersten Kapazitanz zwischen einem ersten Steuerleiter (120) und einem Heizleiter (115), wobei der Heizleiter und der erste Steuerleiter auf der Oberfläche bereitgestellt sind, der erste Steuerleiter von dem Heizleiter beabstandet ist und der Heizleiter und der erste Steuerleiter einen ersten Kondensator (125) bilden;
Übermitteln der ersten Kapazitanz an einen Prozessor (140);
Betreiben des Prozessors, um mindestens teilweise aus der ersten Kapazitanz zu bestimmen, ob eine Enteisungsbedingung erfüllt ist;
Bereitstellen eines elektrischen Stroms für die pulsierende elektrothermische Enteisung (PETD) an den Heizleiter, um den Heizleiter und die Oberfläche über eine Widerstandsheizung aufzuheizen, wenn die Enteisungsbedingung erfüllt ist; und
Nicht-Bereitstellen des elektrischen PETD-Stroms an den Heizleiter, wenn die Enteisungsbedingung nicht erfüllt ist.

9. Verfahren nach Anspruch 8, ferner umfassend:
Messen einer zweiten Kapazitanz (410) zwischen einem zweiten Steuerleiter (405), der an der Oberfläche (105) bereitgestellt ist, und dem Heizleiter (115), wobei der zweite Steuerleiter an der Oberfläche bereitgestellt und von dem Heizleiter und dem ersten Steuerleiter (120) beabstandet ist;
Messen einer dritten Kapazitanz (415) zwischen dem ersten Steuerleiter und dem zweiten Steuerleiter; und
Übermitteln der zweiten Kapazitanz und der dritten Kapazitanz an den Prozessor;
wobei im Betrieb der Prozessor (140) bestimmt, ob die Enteisungsbedingung erfüllt ist, teilweise basierend auf der zweiten Kapazitanz und der dritten Kapazitanz.

10. Verfahren nach Anspruch 8, ferner umfassend das Erkennen einer Änderung im Widerstand des Heizleiters (115); und
Übermitteln der Widerstandsänderung im Heizleiter an den Prozessor (140);
wobei im Betrieb der Prozessor bestimmt, ob die Enteisungsbedingung erfüllt ist, teilweise basierend auf der Änderung im Widerstand des Heizleiters.

11. Verfahren nach Anspruch 8, ferner umfassend:
Bereitstellen eines Wechselstrom-Erregersignals an den ersten Kondensator (125) in einer oder mehreren Frequenzen, wobei das Wechselstrom-Erregersignal einen ersten Strom über den ersten Kondensator induziert; und
wobei das Betreiben des Prozessors (140) zum Bestimmen, ob die Enteisungsbedingung erfüllt ist, teilweise auf der ersten Kapazitanz in der einen oder den mehreren Frequenzen basiert.

12. Verfahren nach Anspruch 8, ferner umfassend:
Bereitstellen einer elektrischen Stromquelle (110) für das Bereitstellen des elektrischen PETD-Stroms;
Bereitstellen eines Speichers, um die Enteisungsbedingung zu speichern; Verbinden des Prozessors, um mit dem Speicher, dem ersten Kondensator und der elektrischen Stromquelle zu kommunizieren.

13. Nichtflüchtiges, computerlesbares Medium, wobei das computerlesbare Medium Anweisungen zum Erkennen und Entfernen von gefrorenen Ablagerungen auf einer Oberfläche (105) einschließt, die wenn sie von einem Prozessor (140) ausgeführt werden, das System nach Anspruch 1 zu Folgendem veranlassen:
Empfangen einer ersten Kapazitanz, die zwischen einem ersten Steuerleiter und einem Heizleiter gemessen wird, wobei der Heizleiter (115) und der erste Steuerleiter (120) auf der Oberfläche bereitgestellt sind, der erste Steuerleiter von dem Heizleiter beabstandet ist und der Heizleiter und der erste Steuerleiter einen ersten Kondensator (125) bilden;
Bestimmen, mindestens teilweise aus der ersten Kapazitanz, ob eine Enteisungsbedingung erfüllt ist;
Bereitstellen über eine elektrische Stromquelle (110) eines elektrischen Stroms für die pulsierende elektrothermische Enteisung (PETD) an den Heizleiter, um den Heizleiter und die Oberfläche aufzuheizen und die gefrorenen Ablagerungen von der Oberfläche zu entfernen, wenn die Enteisungsbedingung erfüllt ist; und
Nicht-Bereitstellen des elektrischen PETD-Stroms an den Heizleiter, wenn die Enteisungsbedingung nicht erfüllt ist.

14. Nichtflüchtiges, computerlesbares Medium nach Anspruch 13, wobei die Anweisungen den Prozessor (140) ferner zu Folgendem veranlassen:
Empfangen einer zweiten Kapazitanz, gemessen zwischen einem zweiten Steuerleiter (405), der an der Oberfläche bereitgestellt ist, und dem Heizleiter, wobei der zweite Steuerleiter von dem Heizleiter und dem ersten Steuerleiter (120) beabstandet ist;
Empfangen einer dritten Kapazitanz, gemessen zwischen dem ersten Steuerleiter und dem zweiten Steuerleiter; und
wobei der Prozessor bestimmt, ob die Enteisungsbedingung erfüllt ist, teilweise auf der zweiten Kapazitanz und der dritten Kapazitanz basiert.

15. Nichtflüchtiges, computerlesbares Medium nach Anspruch 13, wobei die Anweisungen den Prozessor (140) ferner zu Folgendem veranlassen:
Empfangen einer erkannten Änderung im Widerstand des Heizleiters (115); und
wobei das Bestimmen, ob die Enteisungsbedingung erfüllt ist, teilweise auf der Änderung im Widerstand des Heizleiters basiert.

## Revendications

1. Système (100) destiné à détecter et à éliminer une accumulation de gel d'une surface (105), le système comprenant :
une source de courant électrique (110) destinée à fournir un courant électrique de dégivrage électrothermique pulsé (PETD) ;
une piste chauffante (115) disposée au niveau de la surface et couplée à la source de courant électrique, dans lequel, en fonctionnement, le courant électrique de **PETD** circule à travers la piste chauffante pour chauffer par l'intermédiaire du chauffage résistif la piste chauffante de manière à faire fondre, au moins en partie, l'accumulation de gel à partir de la surface ;
une première piste de commande (120) disposée au niveau de la surface espacée de la piste chauffante, la piste chauffante et la première piste de commande formant un premier condensateur (125) destiné à mesurer une première capacité entre la première piste de commande et la piste chauffante ;
une mémoire (145) destinée à mémoriser la condition de dégivrage ; et
un processeur (140) destiné à déterminer, au moins en partie à partir de la première capacité, si la condition de dégivrage est satisfaite, le processeur étant relié à la mémoire, au premier condensateur et à la source de courant électrique, dans lequel, en fonctionnement, le processeur commande la source de courant électrique pour :
fournir le courant électrique de PETD à la piste chauffante lorsque la condition de dégivrage est satisfaite ; et
ne pas fournir le courant électrique de PETD à la piste chauffante lorsque la condition de dégivrage n'est pas satisfaite.

2. Système tel que défini dans la revendication 1 comprenant en outre :
une seconde piste de commande (405) disposée au niveau de la surface espacée de la piste chauffante ;
la seconde piste de commande et la piste chauffante formant un deuxième condensateur (410) destiné à mesurer une deuxième capacité entre la seconde piste de commande et la piste chauffante, le deuxième condensateur comprenant un deuxième port de communication de condensateur destiné à communiquer la deuxième capacité au processeur ; et
la première piste de commande et la seconde piste de commande formant un troisième condensateur (415) destiné à mesurer une troisième capacité entre la première piste de commande et la seconde piste de commande, le troisième condensateur comprenant un troisième port de communication de condensateur destiné à communiquer la troisième capacité au processeur.
dans lequel, en fonctionnement, le processeur détermine si la condition de dégivrage est satisfaite en partie sur la base de la deuxième capacité et de la troisième capacité.

3. Système tel que défini dans la revendication 1, comprenant en outre au moins un capteur de température (155) destiné à mesurer une température de la surface (105), dans lequel ledit au moins un capteur de température est relié pour la communication avec le processeur (140), et, en fonctionnement, le processeur détermine si la condition de dégivrage est satisfaite en partie sur la base de la température de la surface.

4. Système tel que défini dans la revendication 1, dans lequel, en fonctionnement, un changement de résistance de la piste chauffante (115) fournit une indication d'une température de la surface au processeur et le processeur détermine si la condition de dégivrage est satisfaite en partie sur la base de la température de la surface.

5. Système tel que défini dans la revendication 1, dans lequel la surface (105) comprend un capteur de température et, en fonctionnement, le capteur de température fournit une indication d'une température de la surface au processeur et le processeur détermine si la condition de dégivrage est satisfaite en partie sur la base de la température de la surface.

6. Système tel que défini dans la revendication 1, dans lequel la piste chauffante (115) comprend un matériau sélectionné en partie sur la base de sa résistance, dans lequel la résistance est comprise entre 0,09 Ω·m⁻² et 9 Ω·m⁻² (1 ohm et 100 ohms par pied carré) après que le matériau a été traité pour former la piste chauffante.

7. Système tel que défini la revendication 1, comprenant en outre une source d'excitation en courant alternatif (130) destinée à fournir un signal d'excitation en courant alternatif au premier condensateur à une ou plusieurs fréquences, dans lequel, en fonctionnement :
le signal d'excitation en courant alternatif induit un premier courant à travers le premier condensateur ; et
le processeur détermine si la condition de dégivrage est satisfaite en partie sur la base de la première capacité à la ou les fréquences.

8. Procédé de détection et d'élimination d'une accumulation de gel d'une surface (105), le procédé comprenant :
la mesure d'une première capacité entre une première piste de commande (120) et une piste chauffante (115), chaque piste parmi la piste chauffante et la première piste de commande étant disposée sur la surface, la première piste de commande étant espacée de la piste chauffante, la piste chauffante et la première piste de commande formant un premier condensateur (125) ;
la communication de la première capacité à un processeur (140) ;
le fonctionnement du processeur pour déterminer, au moins en partie à partir de la première capacité, si une condition de dégivrage est satisfaite ;
la fourniture d'un courant électrique de dégivrage électrothermique pulsé (PETD) à la piste chauffante pour chauffer par l'intermédiaire du chauffage résistif la piste chauffante et la surface lorsque la condition de dégivrage est satisfaite ; et
la non-fourniture du courant électrique de PETD à la piste chauffante lorsque la condition de dégivrage n'est pas satisfaite.

9. Procédé tel que défini dans la revendication 8 comprenant en outre :
la mesure d'une deuxième capacité (410) entre une seconde piste de commande (405) disposée sur la surface (105) et la piste chauffante (115), la seconde piste de commande étant disposée sur la surface et espacée de la piste chauffante et de la première piste de commande (120) ;
la mesure d'une troisième capacité (415) entre la première piste de commande et la seconde piste de commande ; et
la communication de la deuxième capacité et de la troisième capacité au processeur ;
dans lequel, le fonctionnement du processeur (140) détermine si la condition de dégivrage est satisfaite en partie sur la base de la deuxième capacité et de la troisième capacité.

10. Procédé tel que défini dans la revendication 8, comprenant en outre la détection d'un changement de résistance de la piste chauffante (115) ; et
la communication au processeur (140) du changement de résistance de la piste chauffante ;
dans lequel, le fonctionnement du processeur détermine si la condition de dégivrage est satisfaite en partie sur la base du changement de résistance de la piste chauffante.

11. Procédé tel que défini dans la revendication 8 comprenant en outre :
la fourniture d'un signal d'excitation en courant alternatif au premier condensateur (125) à une ou plusieurs fréquences, dans lequel le signal d'excitation en courant alternatif induit un premier courant à travers le premier condensateur ; et
dans lequel le fonctionnement du processeur (140) détermine si la condition de dégivrage est satisfaite en partie sur la base de la première capacité à la ou les fréquences.

12. Procédé tel que défini dans la revendication 8 comprenant en outre :
la fourniture d'une source de courant électrique (110) destinée à fournir le courant électrique de PETD ;
la fourniture d'une mémoire destinée à mémoriser la condition de dégivrage ; la liaison du processeur destiné à la communication avec la mémoire, le premier condensateur et la source de courant électrique.

13. Support lisible par ordinateur non transitoire, le support lisible par ordinateur comportant des instructions destinées à détecter et à éliminer l'accumulation de gel d'une surface (105) qui, lorsqu'elles sont exécutées par un processeur (140), amènent le système selon la revendication 1 à :
recevoir une première capacité mesurée entre une première piste de commande et une piste chauffante, chaque piste parmi la piste chauffante (115) et la première piste de commande (120) étant disposée sur la surface, la première piste de commande espacée de la piste chauffante, la piste chauffante et la première piste de commande formant un premier condensateur (125) ;
déterminer, au moins en partie à partir de la première capacité, si une condition de dégivrage est satisfaite ;
fournir par l'intermédiaire d'une source de courant électrique (110) d'un courant électrique de dégivrage électrothermique pulsé (PETD) à la piste chauffante pour chauffer la piste chauffante et la surface pour éliminer l'accumulation de gel de la surface lorsque la condition de dégivrage est satisfaite ; et
ne pas fournir le courant électrique de PETD à la piste chauffante lorsque la condition de dégivrage n'est pas satisfaite.

14. Support lisible par ordinateur non transitoire selon la revendication 13, les instructions amenant en outre le processeur (140) à :
recevoir une deuxième capacité mesurée entre une seconde piste de commande (405) disposée sur la surface et la piste chauffante, la seconde piste de commande est espacée de la piste chauffante et de la première piste de commande (120) ;
recevoir une troisième capacité e mesurée entre la première piste de commande et la seconde piste de commande ; et
dans lequel ledit processeur détermine si la condition de dégivrage est satisfaite en partie sur la base de la deuxième capacité et de la troisième capacité.

15. Support lisible par ordinateur non transitoire selon la revendication 13, les instructions amenant en outre le processeur (140) à :
recevoir un changement détecté de résistance de la piste chauffante (115) ; et
dans lequel, ladite détermination si la condition de dégivrage est satisfaite est en partie sur la base du changement de résistance de la piste chauffante.
